# EUROPEAN PATENT APPLICATION

(11) **EP 4 761 298 A1**
(43) Date of publication of application: **17.06.2026**
(21) Application number: 25747614.3
(22) Date of filing: 21.01.2025
(51) Int. Cl.: H04W 4/02, H04W 4/80

(54) **UWB KEY TRANSMISSION METHOD AND RELATED APPARATUS**

(30) Priority: 31.01.2024 CN 202410141571
(71) Applicant: HUAWEI TECHNOLOGIES CO., LTD., Shenzhen 518129 (CN)
(72) Inventor: JI, Guohui, Shenzhen, Guangdong 518129 (CN); YANG, Yuxin, Shenzhen, Guangdong 518129 (CN); DENG, Qing, Shenzhen, Guangdong 518129 (CN)
(74) Representative: Pfenning, Meinig & Partner mbB
(86) International application number: PCT/CN2025/073478
(87) International publication number: WO 2025/162042

(57) **Abstract**

This application provides a UWB key transmission method and a related apparatus, relates to the field of UWB communication technologies, and is applied to an electronic device including a secure chip, a UWB chip, and a central processing unit. The secure chip may establish a secure transmission channel with the UWB chip via the central processing unit, and transfer an ultra-wideband ranging session key (URSK) to the UWB chip through the secure transmission channel. In this way, the secure chip and the UWB chip can be flexibly combined without forcible binding.

## Description

This application claims priority to Chinese Patent Application No. 202410141571.0, filed with the China National Intellectual Property Administration on January 31, 2024 and entitled "UWB KEY TRANSMISSION METHOD AND RELATED APPARATUS", which is incorporated herein by reference in its entirety.

### TECHNICAL FIELD

This application relates to the field of ultra-wideband communication technologies, and in particular, to a UWB key transmission method and a related apparatus.

### BACKGROUND

With application of ultra-wideband (ultra-wideband, UWB) communication technologies, some electronic devices are equipped with UWB chips. The UWB chip may perform ranging and positioning by using the UWB technology, so that the electronic device can implement application scenarios such as automatic vehicle door unlocking upon proximity and automatic vehicle startup upon proximity. In these application scenarios, in a process in which the UWB chip performs ranging and positioning, security of ranging and positioning needs to be ensured. Therefore, the UWB chip needs to use a UWB ranging session key (URSK) to derive and encrypt parameters in the ranging and positioning process for transmission. To ensure security of the URSK, the URSK is generally generated in a secure chip (secure chip, SE Chip) of the electronic device. In a ranging process of the UWB chip, the secure chip of the electronic device may establish a secure transmission channel on a bus connection between the secure chip and the UWB chip, and transmit the URSK to the UWB chip through the secure transmission channel. However, a hardware bus needs to be used to connect the secure chip to the UWB chip in the electronic device, and a certificate or a key used when the secure transmission channel is established needs to be separately preset in the UWB chip and the secure chip before delivery of the electronic device. Consequently, implementation of chip software and hardware on the electronic device is complex, and production costs of the electronic device are high.

### SUMMARY

This application provides a UWB key transmission method and a related apparatus, so that a secure chip of an electronic device securely transmits a URSK to a UWB chip via a central processing unit, and the secure chip and the UWB chip can be flexibly combined without forcible binding.

According to a first aspect, this application provides a UWB key transmission method, applied to an electronic device. The electronic device includes a central processing unit, a UWB chip, and a secure chip. The central processing unit is connected to the UWB chip, and the central processing unit is connected to the secure chip. The method includes: The central processing unit obtains an ultra-wideband transfer key, and stores the ultra-wideband transfer key in the secure chip, where the secure chip stores a target ultra-wideband ranging session key URSK; the secure chip encrypts the target URSK into first encrypted data by using the ultra-wideband transfer key; the secure chip sends the first encrypted data to the UWB chip via the central processing unit, where the UWB chip stores the ultra-wideband transfer key; and the UWB chip decrypts the target URSK from the first encrypted data by using the ultra-wideband transfer key, where the target URSK is used by the UWB chip to perform ranging.

According to the UWB key transmission method provided in this application, the secure chip can securely transmit a URSK to the UWB chip via the central processing unit, and a same symmetric key or digital certificates of the secure chip and the UWB chip do not need to be preset in the UWB chip and the secure chip of the electronic device in advance on a production line. Accordingly, the secure chip and the UWB chip in the electronic device can be flexibly combined without forcible binding, thereby reducing production costs of the electronic device.

In a possible implementation, that the central processing unit obtains the ultra-wideband transfer key specifically includes: The central processing unit obtains the ultra-wideband transfer key sent by a server. In this way, the ultra-wideband transfer key may not need to be preset in the secure chip before delivery of the electronic device, but the server is requested to deliver the ultra-wideband transfer key, thereby reducing the production costs of the electronic device.

In a possible implementation, before the central processing unit obtains the ultra-wideband transfer key sent by the server, the method further includes: The central processing unit obtains a vendor identifier of the UWB chip and a chip identifier of the UWB chip from the UWB chip; and the central processing unit sends a first request to the server, where the first request carries the vendor identifier of the UWB chip and the chip identifier of the UWB chip, and the first request is used to request the server to generate the ultra-wideband transfer key based on a root key, the vendor identifier of the UWB chip, and the chip identifier of the UWB chip. In this way, the ultra-wideband transfer key is derived by using the vendor identifier of the UWB chip, the chip identifier of the UWB chip, and the root key. This can ensure that different electronic devices use different ultra-wideband transfer keys, and ensure uniqueness of the ultra-wideband transfer key for the electronic device, thereby ensuring URSK transmission security.

In a possible implementation, before the central processing unit obtains the ultra-wideband transfer key, the method further includes: Before delivery of the electronic device, the UWB chip exports the vendor identifier of the UWB chip and the chip identifier of the UWB chip to an encryptor, where the encryptor is configured to generate the ultra-wideband transfer key based on the root key, the vendor identifier of the UWB chip, and the chip identifier of the UWB chip; and the UWB chip receives the ultra-wideband transfer key imported by the encryptor. In this way, the ultra-wideband transfer key may be preset only in the UWB chip on the production line, and the ultra-wideband transfer key does not need to be preset in the secure chip. Accordingly, the UWB chip is decoupled from the secure chip, and the UWB chip and the secure chip are not forcibly bound to each other.

In a possible implementation, before the UWB chip stores the ultra-wideband transfer key, the method further includes: The UWB chip generates a first public key and a first private key, where the first public key and the first private key are a pair of public and private keys; the UWB chip sends the first public key to the central processing unit; after obtaining the ultra-wideband transfer key sent by the server, the central processing unit encrypts the ultra-wideband transfer key into second encrypted data by using the first public key; the central processing unit sends the second encrypted data to the UWB chip; and the UWB chip decrypts the ultra-wideband transfer key from the second encrypted data by using the first private key. In this way, the ultra-wideband transfer key may not need to be preset in the UWB chip before delivery of the electronic device, but after obtaining the ultra-wideband transfer key from the server, the central processing unit establishes a secure transmission channel with the UWB chip, and securely transmits the ultra-wideband transfer key to the UWB chip. This reduces the production costs of the electronic device.

In a possible implementation, before the UWB chip stores the ultra-wideband transfer key, the method further includes: The UWB chip generates the ultra-wideband transfer key.

In a possible implementation, before the central processing unit obtains the ultra-wideband transfer key, the method further includes: The central processing unit generates a second public key and a second private key, where the second public key and the second private key are a pair of public and private keys; and the central processing unit sends the second public key to the UWB chip. That the central processing unit obtains the ultra-wideband transfer key specifically includes: The UWB chip encrypts the ultra-wideband transfer key into third encrypted data by using the second public key; the UWB chip sends the third encrypted data to the central processing unit; and the central processing unit decrypts the ultra-wideband transfer key from the third encrypted data by using the second private key. In this way, the UWB chip can generate the ultra-wideband transfer key, and establish a secure transmission channel with the central processing unit. Accordingly, the central processing unit securely writes the ultra-wideband transfer key into the secure chip, thereby reducing deployment costs of a server and the production costs of the electronic device.

In a possible implementation, that the UWB chip generates the ultra-wideband transfer key specifically includes: The UWB chip randomly generates the ultra-wideband transfer key. In this way, it can be ensured that ultra-wideband transfer keys used in UWB chips of different electronic devices are different, and uniqueness of the ultra-wideband transfer key for the electronic device is ensured, thereby ensuring URSK transmission security.

In a possible implementation, the UWB chip stores a vendor identifier of the UWB chip and a chip identifier of the UWB chip. That the UWB chip generates the ultra-wideband transfer key specifically includes: The UWB chip generates the ultra-wideband transfer key based on a root key, the vendor identifier of the UWB chip, and the chip identifier of the UWB chip. In this way, it can be ensured that ultra-wideband transfer keys used in UWB chips of different electronic devices are different, and uniqueness of the ultra-wideband transfer key for the electronic device is ensured, thereby ensuring URSK transmission security.

In a possible implementation, that the UWB chip generates the ultra-wideband transfer key based on the root key, the vendor identifier of the UWB chip, and the chip identifier of the UWB chip specifically includes: The UWB chip generates a pair key based on the root key and the vendor identifier of the UWB chip; and the UWB chip generates the ultra-wideband transfer key based on the pair key and the chip identifier of the UWB chip.

In a possible implementation, that the secure chip stores the target ultra-wideband ranging session key URSK specifically includes: The secure chip generates one or more URSKs by using a stored car key session key, where the one or more URSKs include the target URSK; and the secure chip stores the one or more URSKs, where different URSKs correspond to different session identifiers.

In a possible implementation, before the secure chip encrypts the target URSK into the first encrypted data by using the ultra-wideband transfer key, the method further includes: The UWB chip sends a URSK obtaining command to the secure chip via the central processing unit, where the URSK obtaining command carries a first session identifier; and after receiving the URSK obtaining command, the secure chip determines, from the one or more URSKs, the target URSK corresponding to the first session identifier.

In a possible implementation, before the UWB chip sends the URSK obtaining command to the secure chip via the central processing unit, the method further includes: The UWB chip sends a get challenge command to the secure chip via the central processing unit; the secure chip sends a first random number to the UWB chip via the central processing unit after receiving the get challenge command; the UWB chip encrypts the first random number into an authentication ciphertext by using the ultra-wideband transfer key, and sends the authentication ciphertext to the secure chip via the central processing unit; the secure chip decrypts a second random number from the authentication ciphertext by using the ultra-wideband transfer key; and if the second random number is the same as the first random number, the secure chip sends a first response to the UWB chip via the central processing unit, where the first response indicates that random number verification succeeds. That the UWB chip sends the URSK obtaining command to the secure chip via the central processing unit specifically includes: The UWB chip sends the URSK obtaining command to the secure chip via the central processing unit after receiving the first response.

In a possible implementation, the central processing unit runs a rich execution environment REE and a trusted execution environment TEE, and a car key application runs in the REE. That the central processing unit obtains the ultra-wideband transfer key specifically includes: The central processing unit obtains the ultra-wideband transfer key by using the car key application. That the central processing unit stores the ultra-wideband transfer key in the secure chip specifically includes: The central processing unit stores the ultra-wideband transfer key in the secure chip by using the car key application and the TEE.

In a possible implementation, the UWB chip is not connected to the secure chip. In this way, the UWB chip and the secure chip do not need to be forcibly connected to each other, thereby reducing difficulty and production costs of installing the UWB chip and the secure chip in the electronic device.

According to a second aspect, this application provides a UWB key transmission method, applied to an electronic device. The electronic device includes a central processing unit, a microcontroller unit, a UWB chip, and a secure chip. The central processing unit is connected to the microcontroller unit, the central processing unit is connected to the secure chip, and the microcontroller unit is connected to the UWB chip. The method includes: The secure chip stores a target URSK; the central processing unit obtains the target URSK from the secure chip; the central processing unit sends the target URSK to the microcontroller unit; the microcontroller unit generates a UWB communication packet based on the target URSK; the microcontroller unit sends the UWB communication packet to the UWB chip; and the UWB chip sends the UWB communication packet after receiving the UWB communication packet sent by the microcontroller unit, where the UWB communication packet is used for ranging.

According to a third aspect, this application provides an electronic device, including one or more processors, one or more memories, a secure chip, and a UWB chip. The one or more processors include a central processing unit. The central processing unit is connected to the UWB chip, and the central processing unit is connected to the secure chip. The one or more memories are configured to store a computer program. When the one or more processors execute the computer program, the electronic device is enabled to perform the method according to any one of the possible implementations of any one of the foregoing aspects.

According to a fourth aspect, this application provides a computer storage medium, including a computer program. When the computer program is run on a processor of an electronic device, the electronic device is enabled to perform the method according to any one of the possible implementations of any one of the foregoing aspects.

According to a fifth aspect, this application provides a computer program product. When the computer program product runs on a processor of an electronic device, the electronic device is enabled to perform the method according to any one of the possible implementations of any one of the foregoing aspects.

For beneficial effect of the second aspect to the fifth aspect, refer to the beneficial effect of any one of the first aspect and the possible implementations of the first aspect. Details are not described herein again.

### BRIEF DESCRIPTION OF DRAWINGS

FIG. 1 is a diagram of an application scenario of UWB ranging according to an embodiment of this application;
FIG. 2 is a diagram of an architecture of a digital car key system according to an embodiment of this application;
FIG. 3 is a diagram of functional modules of a secure chip and a UWB chip according to an embodiment of this application;
FIG. 4 is a diagram of a process in which a secure chip transmits a URSK to a UWB chip according to an embodiment of this application;
FIG. 5 is a diagram of a principle of a UWB key transmission method according to an embodiment of this application;
FIG. 6A and FIG. 6B are a diagram of a UWB key transmission method according to an embodiment of this application;
FIG. 7A is a diagram of a process of generating a pair key according to an embodiment of this application;
FIG. 7B is a diagram of a process of generating an ultra-wideband transfer key according to an embodiment of this application;
FIG. 7C-1 and FIG. 7C-2 are a diagram of a URSK transmission process according to an embodiment of this application;

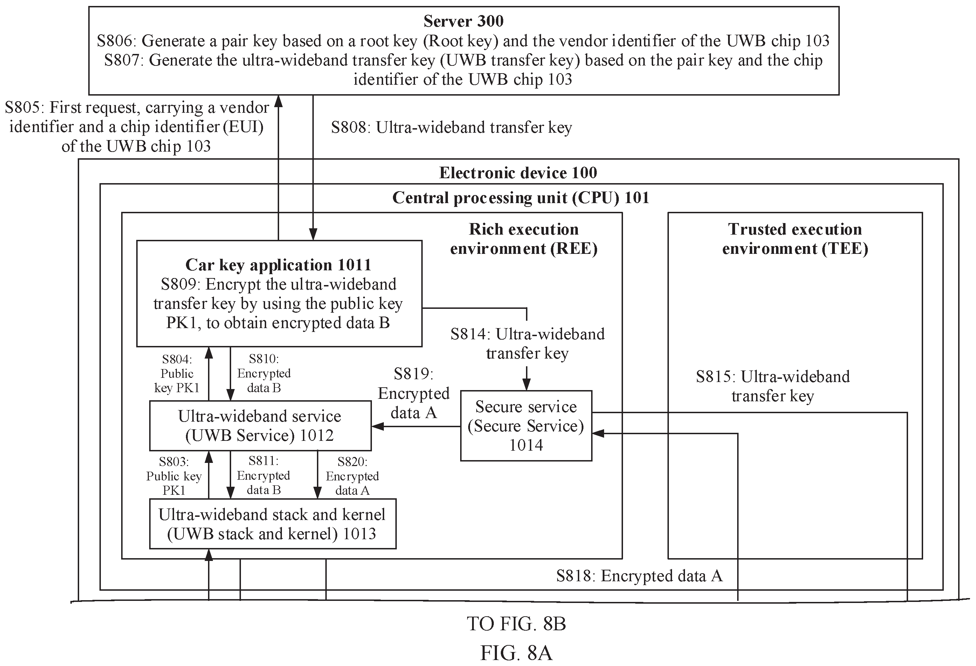

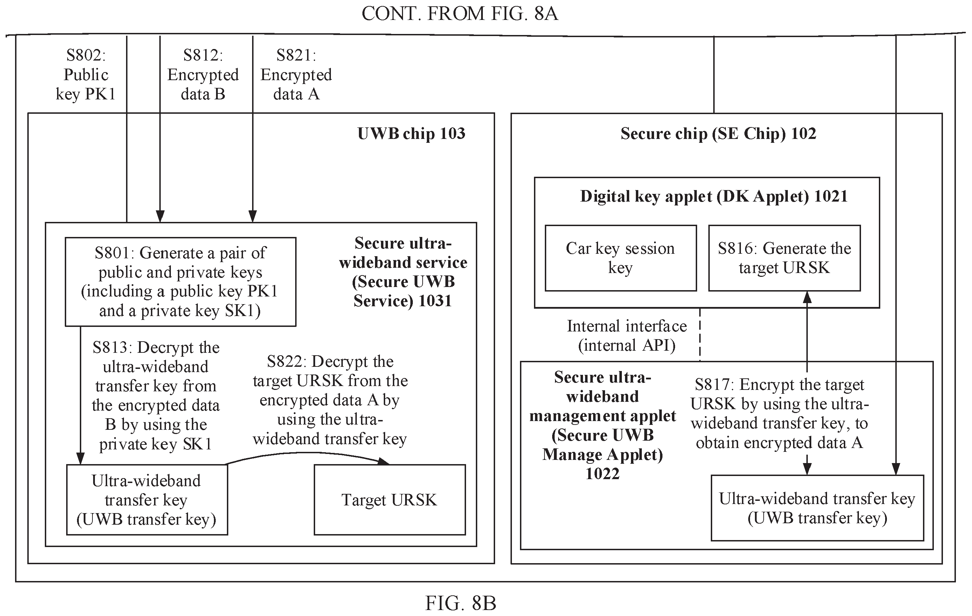

FIG. 8A and FIG. 8B are a diagram of a UWB key transmission method according to another embodiment of this application;

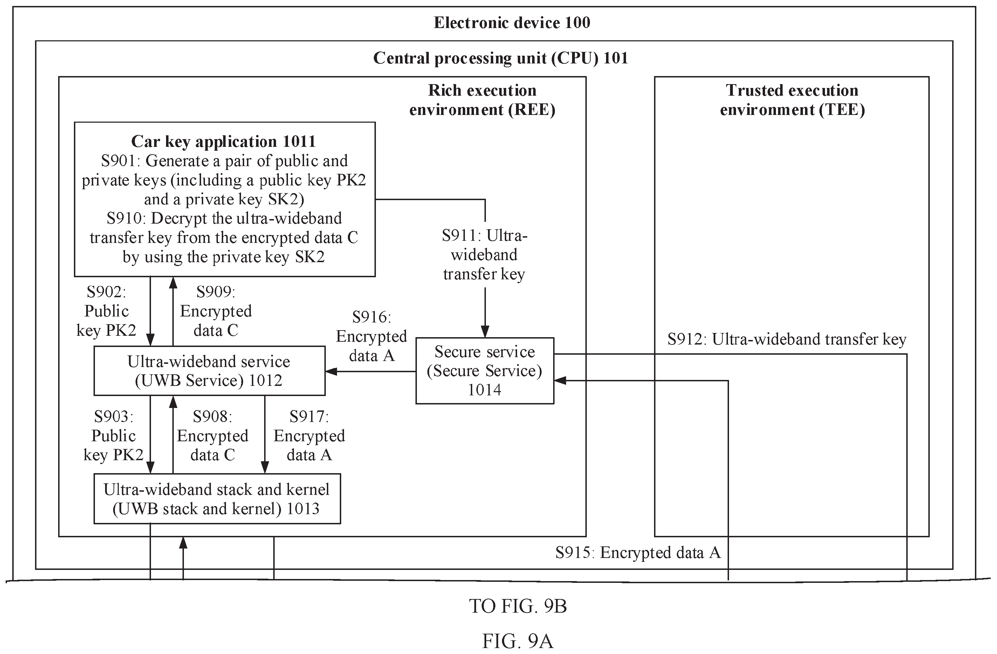

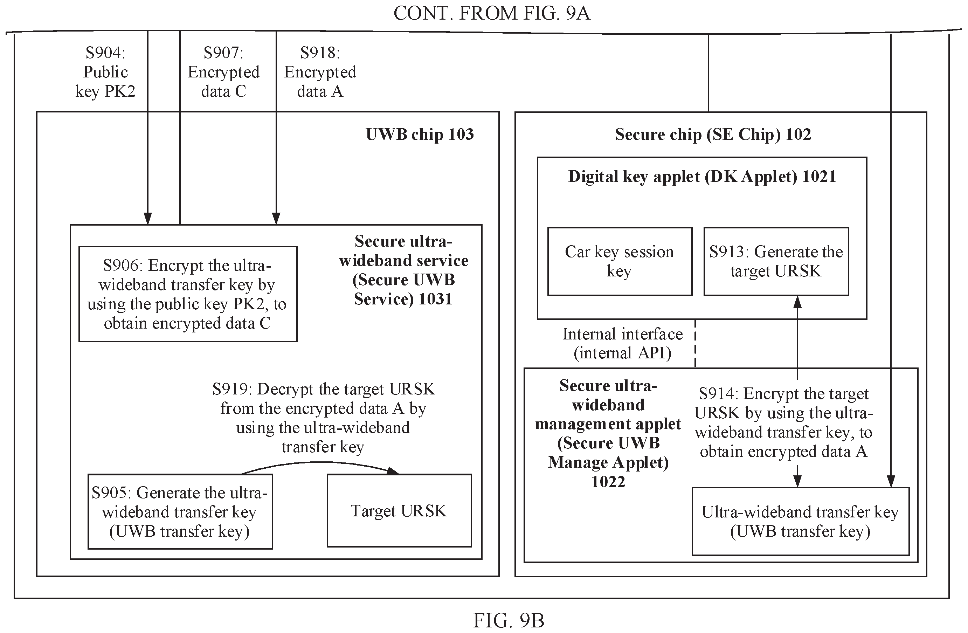

FIG. 9A and FIG. 9B are a diagram of a UWB key transmission method according to another embodiment of this application;

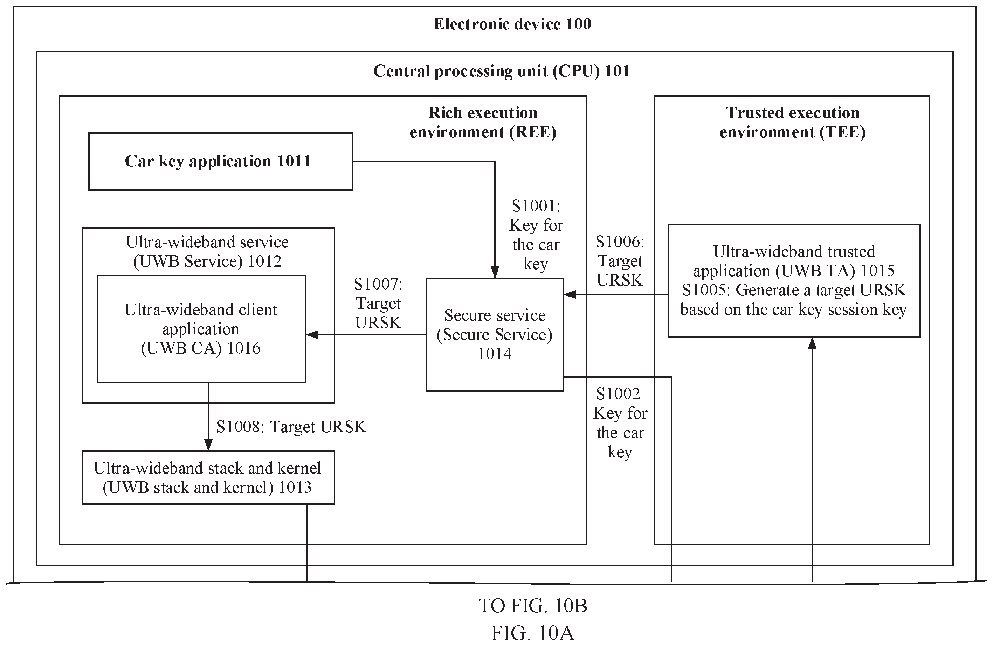

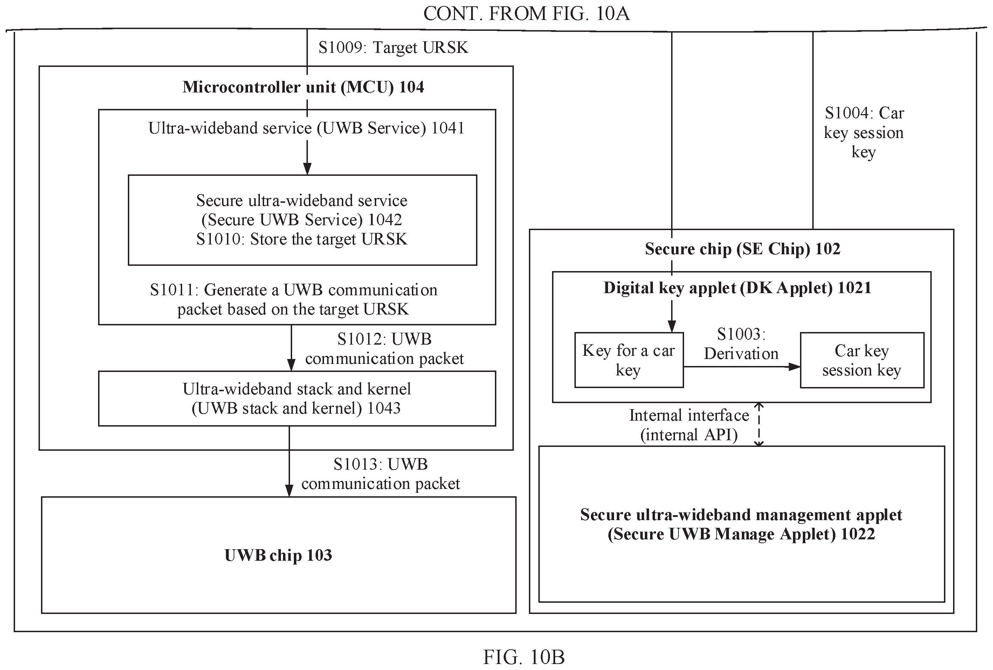

FIG. 10A and FIG. 10B are a diagram of a UWB key transmission method according to another embodiment of this application;

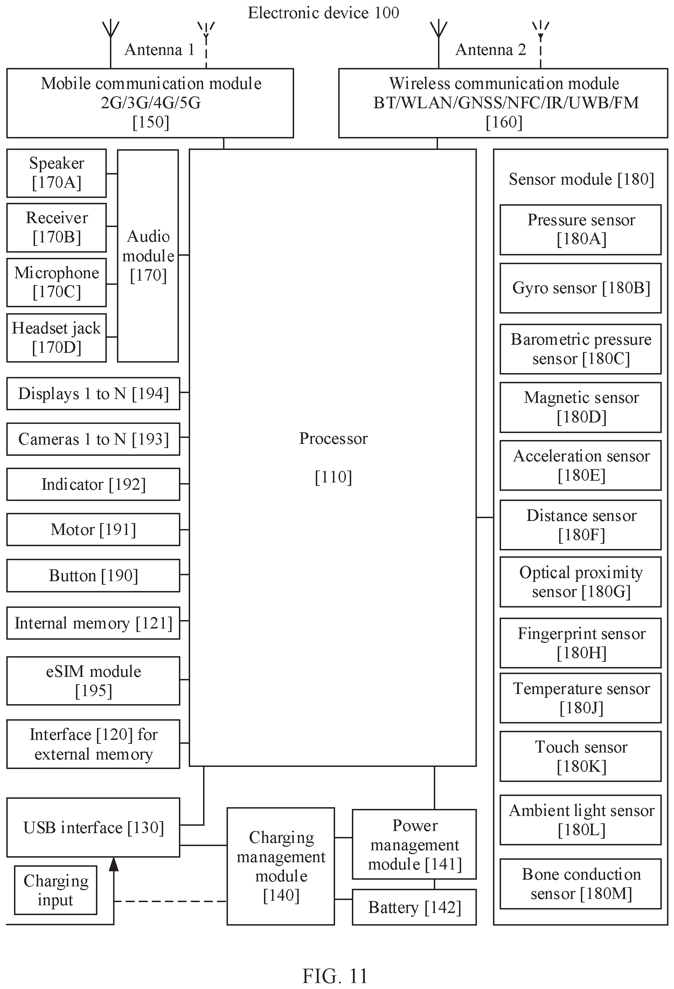

FIG. 11 is a diagram of a hardware structure of an electronic device according to an embodiment of this application; and

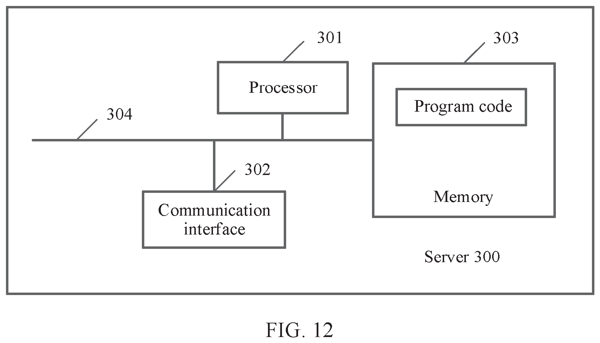

FIG. 12 is a diagram of a hardware structure of a server according to an embodiment of this application.

### DESCRIPTION OF EMBODIMENTS

With reference to the accompanying drawings, the following clearly describes in detail the technical solutions in embodiments of this application. In the descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

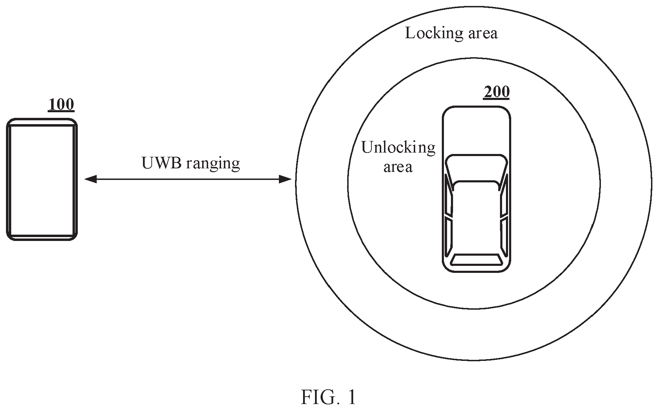

FIG. 1 is a diagram of an application scenario of UWB ranging according to an embodiment of this application.

As shown in FIG. 1, an electronic device 100 may measure a distance between the electronic device 100 and a vehicle 200 by using a UWB ranging technology. When the electronic device 100 approaches the vehicle 200 and enters an unlocking area, the electronic device 100 may unlock a vehicle door of the vehicle 200 by using a digital car key. Optionally, when entering the unlocking area, the electronic device 100 may further start the vehicle 200 (for example, start an engine or a power supply of the vehicle 200) by using the digital car key. When the electronic device 100 gradually moves away from the unlocking area and enters a locking area, the electronic device 100 may automatically lock the vehicle door of the vehicle 200 by using the digital car key. Optionally, when moving away from the unlocking area and entering the locking area, the electronic device 100 may further turn off the engine or the power supply of the vehicle 200 by using the digital car key.

In this way, a user does not need to carry a physical car key, can automatically unlock the vehicle door of the vehicle 200 by only making the electronic device 100 carrying a key for the enabled digital car key approach the vehicle 200, and can automatically lock the vehicle door of the vehicle 200 by only making the electronic device move away from the vehicle 200.

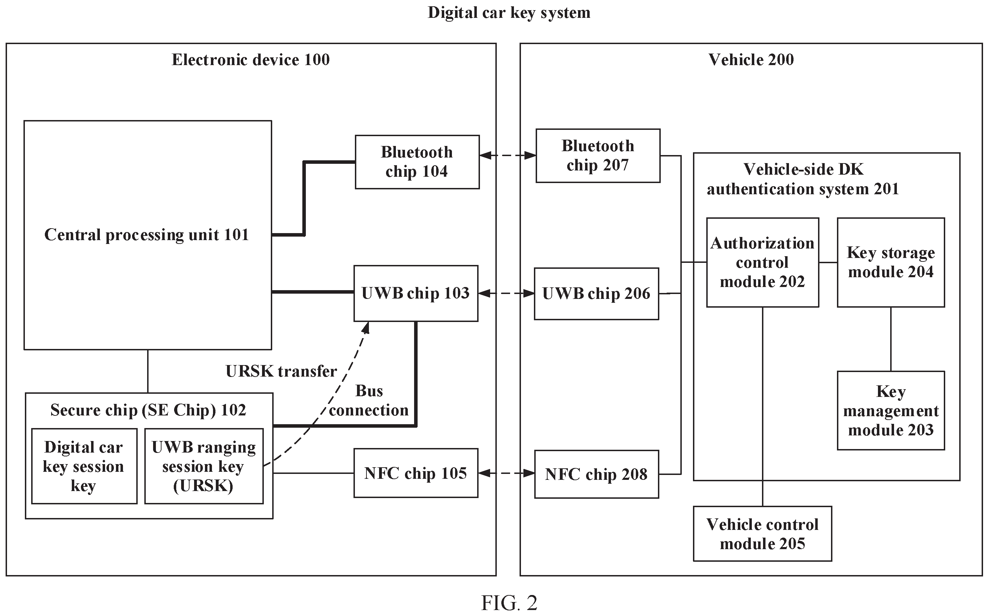

FIG. 2 is a diagram of an architecture of a digital car key system according to an embodiment of this application.

As shown in FIG. 2, the digital car key system may include the electronic device 100 and the vehicle 200. The electronic device 100 may include a central processing unit 101, a secure chip (secure chip, SE Chip) 102, and a UWB chip 103. Optionally, the electronic device 100 may further include a Bluetooth chip 104 and an NFC chip 105. The vehicle 200 may include a vehicle-side digital key (digital key, DK) authentication system 201, a vehicle control module 205, and a UWB chip 206. Optionally, the vehicle 200 may further include a Bluetooth chip 207 and an NFC chip 208.

The vehicle-side DK authentication system 201 may include an authorization control module 202, a key management module 203, and a key storage module 204. The vehicle-side DK authentication system 201 may be configured to implement secure interaction between a mobile terminal and a vehicle body control module. The key management module 203 may be configured to be responsible for delivery, update, deletion, and blocklist and allowlist management functions. The authorization control module 202 may be configured to be responsible for two-way authorization and service information exchange with the electronic device 100, and a vehicle-side service logic control function. The key storage module 204 may be configured to be responsible for secure storage of basic key information. The vehicle control module 205 may be configured to be responsible for controlling a vehicle body electronic or power system and executing related digital car key service logic.

The vehicle-side DK authentication system 201 may establish a communication connection to the electronic device 100 via a short-range communication module like the UWB chip 206, the Bluetooth chip 207, or the NFC chip 208, and receive authorization information and service data that are sent by the electronic device 100. The authorization control module 202 may perform two-way authorization on the electronic device 100 based on a secure key stored in the key storage module, check key service data, check a ranging or vehicle control instruction, and the like.

In some solutions, the UWB chip 103 in the electronic device 100 is connected to the secure chip 102 via a bus. For example, the bus may include a serial peripheral interface (serial peripheral interface, SPI) bus or an inter-integrated circuit (inter-integrated circuit, I2C) bus. After enabling a digital car key of the vehicle 200, the electronic device 100 may obtain a key for the car key. The electronic device 100 may store the key for the car key in the secure chip 102. The secure chip 102 may derive a car key session key (Session key) based on the key for the car key. The secure chip 102 may generate an ultra-wideband ranging session key (ultra-wideband ranging session key, URSK) based on the car key session key. The secure chip 102 may transfer the URSK to the UWB chip 103 through a bus connection. After receiving the URSK, the UWB chip 103 may derive a ranging process key according to a UWB ranging protocol like a FiRa protocol or CCC based on the URSK. The UWB chip 103 may perform UWB ranging communication with the UWB chip 206 in the vehicle 200 by using the ranging process key, to ensure security in a UWB ranging process.

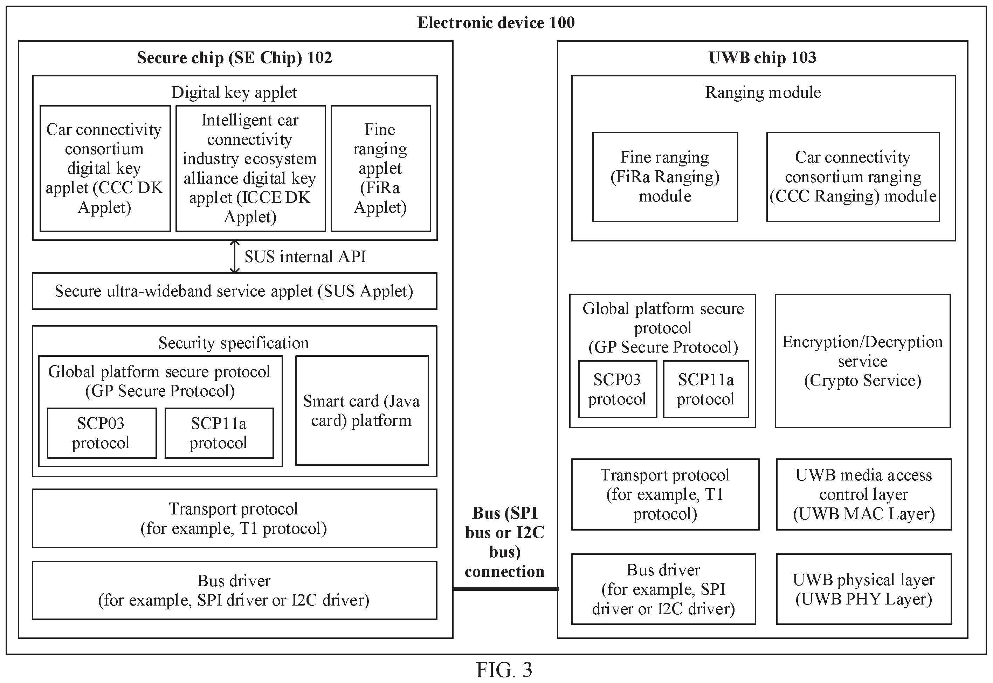

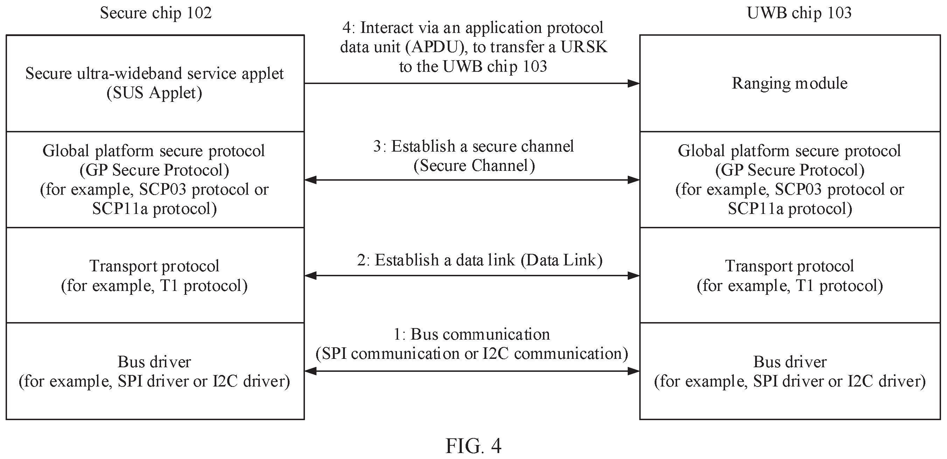

With reference to FIG. 3 and FIG. 4, the following describes a process in which the secure chip 102 in the electronic device 100 transfers the URSK to the UWB chip 103.

FIG. 3 is a diagram of functional modules of the secure chip 102 and the UWB chip 103 according to an embodiment of this application.

As shown in FIG. 3, the secure chip 102 is connected to the UWB chip 103 via a bus. For example, the bus may be an SPI bus or an I2C bus.

The secure chip 102 may include a digital key applet (digital key applet, DK Applet), a secure ultra-wideband service applet (secure UWB service applet, SUS Applet), a security specification, a transport protocol (for example, a T1 protocol), and a bus driver (for example, an SPI driver or an I2C driver). The security specification may include a global platform secure protocol (Global Platform secure protocol, GP Secure Protocol) and a smart card (Java card) platform.

The digital key applet may include one or more of the following: a car connectivity consortium digital key applet (car connectivity consortium digital key applet, CCC DK Applet), an intelligent car connectivity industry ecosystem alliance digital key applet (intelligent car connectivity industry ecosystem alliance digital key applet, ICCE DK Applet), or a fine ranging applet (fine ranging applet, FiRa Applet). The digital key applet may communicate with the SUS applet via a secure ultra-wideband service internal application interface (secure UWB service internal application interface, SUS internal API). The digital key applet may invoke the SUS applet to establish a secure transmission channel between the secure chip 102 and the UWB chip 103, and transfer the URSK to the UWB chip 103 through the secure transmission channel.

The global platform secure protocol on the secure chip 102 may include an SCP03 protocol, an SCP11a protocol, and the like. The global platform secure protocol may be used to establish a secure transmission channel between the secure chip 102 and another module (for example, the UWB chip 103). The Java card platform may be configured to: run applications (for example, the digital key applet and the secure ultra-wideband service applet) on the secure chip 102, and ensure security between these applications. The transport protocol on the secure chip 102 may be used to establish a data link between the UWB chip 103 and another module (for example, the secure chip 102).

The UWB chip 103 may include a ranging module, a global platform secure protocol (GP Secure protocol), an encryption/decryption service (Crypto Service), a transport protocol (for example, the T1 protocol), a bus driver (for example, an SPI driver or an I2C driver), a UWB media control layer (UWB media access control layer, UWB MAC Layer), and a UWB physical layer (UWB physical layer, UWB PHY Layer).

The ranging module may include one or more of the following: a fine ranging (Fine Ranging) module or a car connectivity consortium ranging (CCC Ranging) module. The ranging module may send or receive a UWB signal to or from another device (for example, the vehicle 200) by using the UWB MAC layer and the UWB PHY layer, to complete ranging or positioning between the electronic device 100 and the another device (for example, the vehicle 200).

The global platform secure protocol on the UWB chip 103 may be used to establish a secure transmission channel between the UWB chip 103 and another module (for example, the secure chip 102). The encryption/decryption service may be used to provide an encryption or decryption function inside the UWB chip 103. The transport protocol on the UWB chip 103 may be used to establish a data link between the UWB chip 103 and another module (for example, the secure chip 102).

FIG. 4 is a diagram of a process in which a secure chip transmits a URSK to a UWB chip according to an embodiment of this application.

As shown in FIG. 4, the process in which the secure chip transmits the URSK to the UWB chip may be as follows:
1: The secure chip 102 and the UWB chip 103 may perform bus communication via a bus driver.
   For example, the bus driver may include an SPI driver or an I2C driver. The bus communication may include SPI communication or I2C communication.
2: The secure chip 102 may establish a data link (Data Link) with the UWB chip 103 according to a transport protocol.
   For example, the transport protocol may be a T1 protocol.
3: A secure channel may be established between the secure chip 102 and the UWB chip 103 according to a global platform secure protocol (GP Secure Protocol).
   For example, the GP secure protocol may include an SCP03 protocol or an SCP11a protocol.
4: The SUS applet of the secure chip 102 may interact with the ranging module of the UWB chip 103 via an application protocol data unit (application protocol data unit, APDU), to transfer the URSK to the UWB chip 103.

In a solution in which the secure transmission channel is established according to the SCP03 protocol, a symmetric key needs to be separately preset in the secure chip 102 and the UWB chip 103 on a production line before delivery of the electronic device 100. Therefore, after delivery, when the electronic device 100 performs ranging via the UWB chip 103 after enabling a digital car key, the secure chip 102 may encrypt the URSK by using the preset symmetric key, and send the encrypted URSK to the UWB chip 103 through the secure transmission channel established according to the SCP03 protocol. The UWB chip 103 decrypts the URSK from the encrypted URSK by using the preset symmetric key. However, different symmetric keys need to be preset on different electronic devices, to avoid decrypting the URSK from the encrypted URSK on the electronic device 100 by using a symmetric key preset in a secure chip or a UWB chip on another device, thereby ensuring security of the electronic device 100 in a UWB ranging or positioning process.

In a solution in which the secure transmission channel is established according to the SCP11a protocol, digital certificates of the secure chip 102 and the UWB chip 103 need to be preset in the secure chip 102 and the UWB chip 103 on a production line before delivery of the electronic device 100. When the secure transmission channel is established, the secure chip 102 and the UWB chip 103 need to verify the digital certificates of each other and mutually exchange public keys. The secure chip 102 may derive a symmetric key by using a private key of the secure chip 102 and the public key of the UWB chip 103. The UWB chip 103 may derive the same symmetric key by using a private key of the UWB chip 103 and the public key of the secure chip 102. Therefore, after delivery, when the electronic device 100 performs ranging or positioning via the UWB chip 103 after enabling a digital car key, the secure chip 102 may encrypt the URSK by using the symmetric key, and send the encrypted URSK to the UWB chip 103 through the secure transmission channel established according to the SCP11a protocol. The UWB chip 103 decrypts the URSK from the encrypted URSK by using the symmetric key. However, the UWB chip 103 needs to be paired with the secure chip 102 to form a coupling relationship, to avoid decrypting the URSK from the encrypted URSK on the electronic device 100 by using a symmetric key agreed on by a secure chip and a UWB chip on another device, thereby ensuring security of the electronic device 100 in a UWB ranging or positioning process.

However, in the SCP03 solution or the SCP11a solution, because the UWB chip and the secure chip of the electronic device need to be connected to each other through a bus to form the coupling relationship, and the same symmetric key or the digital certificates of the UWB chip and the secure chip need to be preset in both the UWB chip and the secure chip of the electronic device in advance on the production line, complexity of hardware and software on the electronic device on the production line is increased, resulting in high production costs of the electronic device.

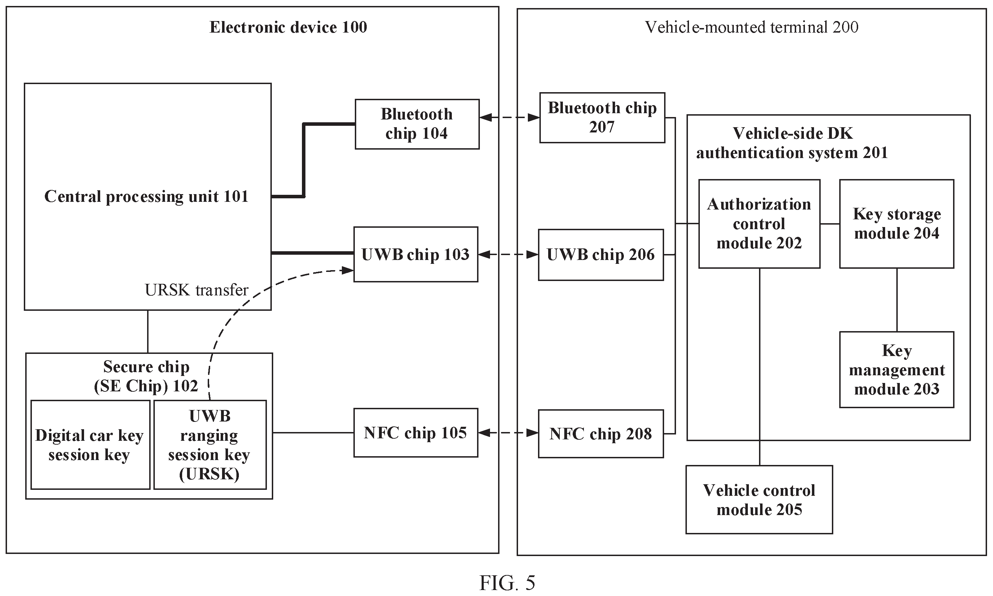

Therefore, as shown in FIG. 5, an embodiment of this application provides a UWB key transmission method, so that a secure chip 102 can establish a secure transmission channel with a UWB chip 103 via a central processing unit 101, and transfer a URSK to the UWB chip 103 through the secure transmission channel established with the UWB chip 103 via the central processing unit 101.

Specifically, the central processing unit 101 may obtain an ultra-wideband transfer key, and store the ultra-wideband transfer key in the secure chip 102. The secure chip 102 stores a target URSK. The secure chip 102 encrypts the target URSK into first encrypted data by using the ultra-wideband transfer key. The secure chip 102 may send the first encrypted data to the UWB chip 103 via the central processing unit 101, where the UWB chip 103 stores the ultra-wideband transfer key. The UWB chip 103 decrypts the target URSK from the first encrypted data by using the ultra-wideband transfer key, where the target URSK is used by the UWB chip to perform ranging. In this way, the secure chip 102 and the UWB chip 103 can be flexibly combined without forcible binding.

The following describes a UWB key transmission method provided in embodiments of this application.

An embodiment of this application provides a UWB key transmission method. Before delivery of an electronic device 100, an ultra-wideband transfer key (UWB transfer key) may be preset in a UWB chip via an encryptor. The electronic device 100 may request, by using a car key application running on a central processing unit, a server to generate a same ultra-wideband transfer key. After obtaining the ultra-wideband transfer key delivered by the server, the car key application may store the ultra-wideband transfer key in a secure chip by using a trusted execution environment (trusted execution environment, TEE) on the central processing unit. The secure chip may encrypt, by using the UWB transfer key, a URSK required when the UWB chip performs ranging, to obtain encrypted data A. The secure chip may transfer the encrypted data A to the UWB chip by using the TEE and a rich execution environment (rich execution environment, REE) on the central processing unit. The UWB chip may decrypt the URSK from the encrypted data A by using the preset UWB transfer key. In this way, when it can be ensured that the URSK is securely transmitted from the secure chip to the UWB chip, the UWB chip can also be decoupled from the secure chip. Accordingly, the UWB chip and the secure chip do not need to be directly connected to each other, and the secure chip and the UWB chip can be flexibly combined without forcible binding.

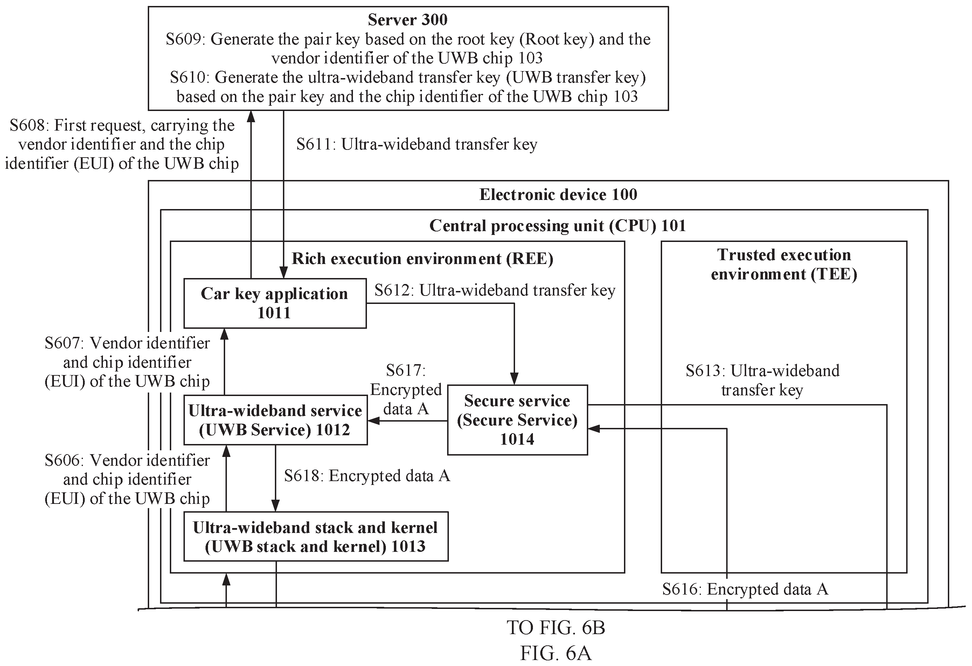

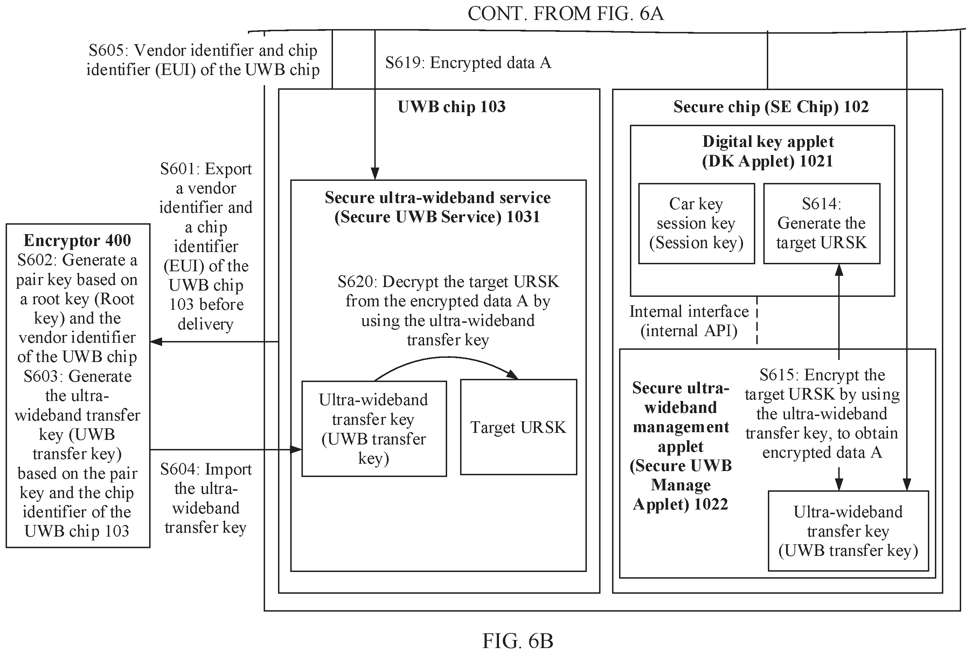

FIG. 6A and FIG. 6B are a diagram of a UWB key transmission method according to an embodiment of this application.

As shown in FIG. 6A and FIG. 6B, the UWB key transmission method may be applied to a UWB key transmission system. The UWB key transmission system may include an electronic device 100, a server 300, and an encryptor 400. The electronic device 100 may include a central processing unit (central processing unit, CPU) 101, a secure chip (SE Chip) 102, and a UWB chip 103. The secure chip 102 is not connected to the UWB chip 103. The secure chip 102 may be connected to the central processing unit 101, and the UWB chip 103 may be connected to the central processing unit 101. The central processing unit 101 may run two application environments: an REE and a TEE. A car key application 1011, an ultra-wideband service (UWB Service) 1012, an ultra-wideband stack and kernel (UWB stack and kernel) 1013, and a secure service (Secure Service) 1014 may run in the REE.

In a possible implementation, when the secure chip 102 is connected to the UWB chip 103, the UWB key transmission method provided in this embodiment of this application can still be used.

An operating system running in the REE may be referred to as a rich execution environment operating system (REE OS), and an operating system running in the TEE may be referred to as a trusted execution environment operating system (TEE OS). The TEE is a secure running environment running on the CPU. A secure boot process of the TEE needs to be verified, and the secure boot process of the TEE is separated from that of the REE. Applications running in the TEE are independent of each other, and the applications cannot access each other without authorization. This ensures that a resource and data processing process of the application in the TEE is executed in a trusted environment, thereby providing a secure service for the REE operating system. The TEE has its own execution space, has a higher security level than the REE operating system, and is a security architecture that overlaps a hardware architecture of the currently used CPU. Software and hardware resources that can be accessed by the TEE are separate from those of the REE operating system, and hardware supported isolation is provided.

The secure chip 102 may include a digital key applet (DK Applet) 1021 and a secure ultra-wideband management applet (Secure UWB management Applet) 1022. The digital key applet 1021 may be any one of a CCC DK applet, an ICCE DK applet, or a FiRa applet. The digital key applet 1021 may invoke the secure ultra-wideband management applet 1022 via an internal interface (internal API).

The UWB chip 103 may include a secure ultra-wideband service (Secure UWB Service) 1031.

The UWB key transmission method may include the following steps.

S601: The encryptor 400 exports a vendor identifier and a chip identifier (EUI) of the UWB chip 103 from the UWB chip 103 before delivery of the electronic device 100.

After being produced, the UWB chip 103 may store the vendor identifier and the chip identifier of the UWB chip 103 in a storage medium inside the UWB chip 103.

S602: The encryptor 400 generates a pair key (Pair key) based on a root key (Root key) and the vendor identifier of the UWB chip 103.

The encryptor 400 performs an operation according to an AES128-CBC encryption algorithm based on the root key and the vendor identifier of the UWB chip 103, to generate the pair key (Pair key). Optionally, the encryptor 400 may alternatively generate the pair key (Pair key) according to another encryption algorithm. This is not limited in embodiments of this application.

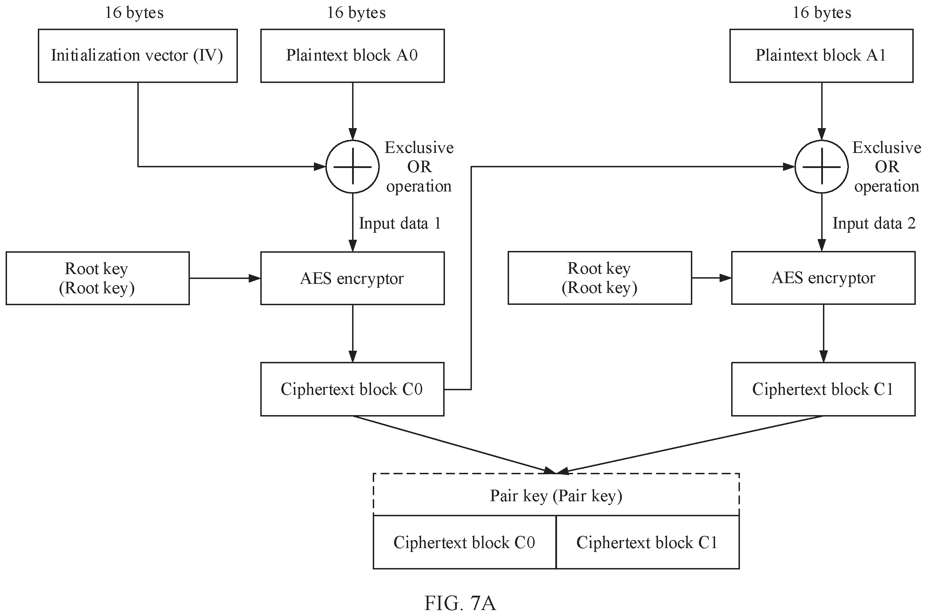

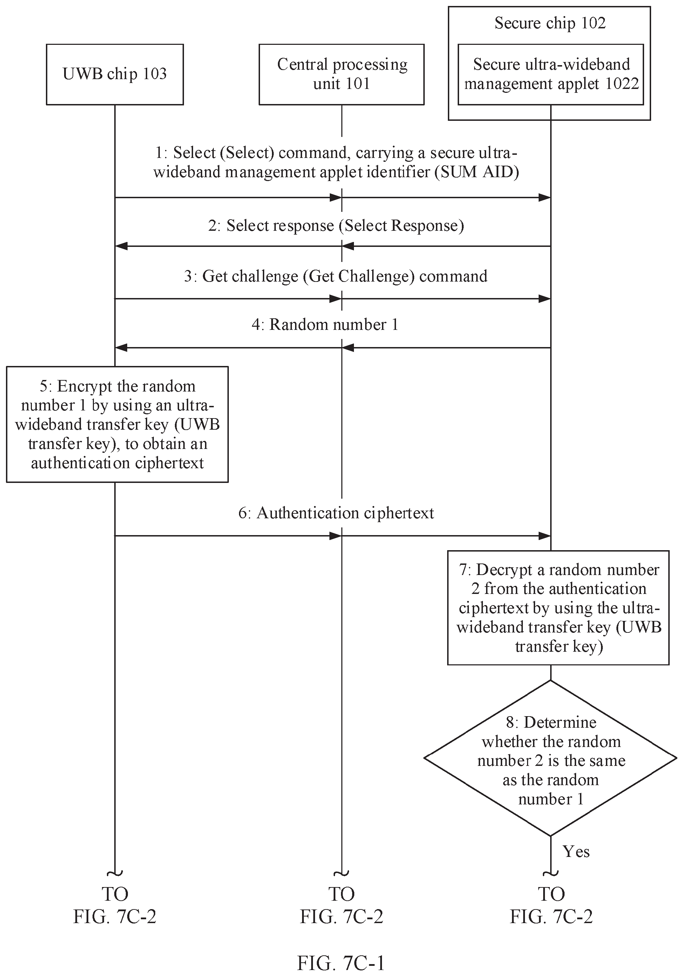

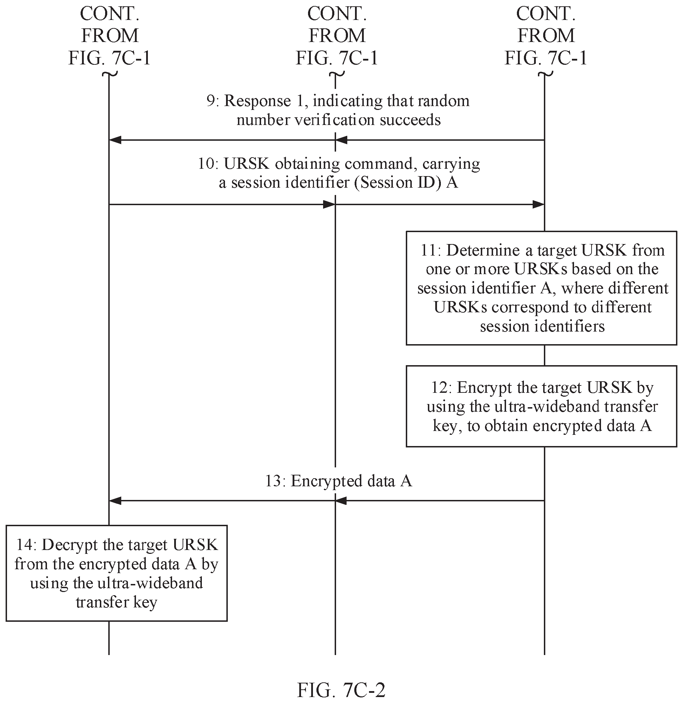

For example, as shown in FIG. 7A, a process of generating the pair key according to the AES 128-CBC encryption algorithm based on the root key and the vendor identifier of the UWB chip 103 may be as follows:
1: Generate a plaintext block A0 and a plaintext block A1 based on the vendor identifier of the UWB chip 103.
   A data length of the vendor identifier of the UWB chip 103 may be 8 bytes. Data lengths of the plaintext block A0 and the plaintext block A1 may both be 16 bytes. The plaintext block A0 may be "vendor identifier∥bitwise negated vendor identifier", where the symbol "∥" represents data concatenation. The plaintext block A1 may be "vendor identifier∥padding value 1∥padding value 2∥data of first four bytes of the vendor identifier∥padding value 3∥padding value 4". A data length of each padding value is 1 byte. For example, the padding value 1 may be "F2", the padding value 2 may be "02", the padding value 3 may be "2F", and the padding value 4 may be "02".
2: Perform an exclusive OR operation on an initialization vector (initialization vector, IV) and the plaintext block A0, to obtain input data 1.
   A data length of the initialization vector may be 16 bytes.
3: Input the input data 1 and the root key to an AES encryptor to perform an encryption operation, to obtain a ciphertext block C0.
4: Perform an exclusive OR operation on the ciphertext block C0 and the plaintext block A1, to obtain input data 2.
5: Input the input data 2 and the root key to the AES encryptor to perform an encryption operation, to obtain a ciphertext block C1.
6: Concatenate the ciphertext block C0 and the ciphertext block C1, to obtain the pair key (Pair key).

For example, the ciphertext block C1 may be concatenated at a tail of the ciphertext block C0.

S603: The encryptor 400 generates an ultra-wideband transfer key (UWB transfer key) based on the pair key and the chip identifier of the UWB chip 103.

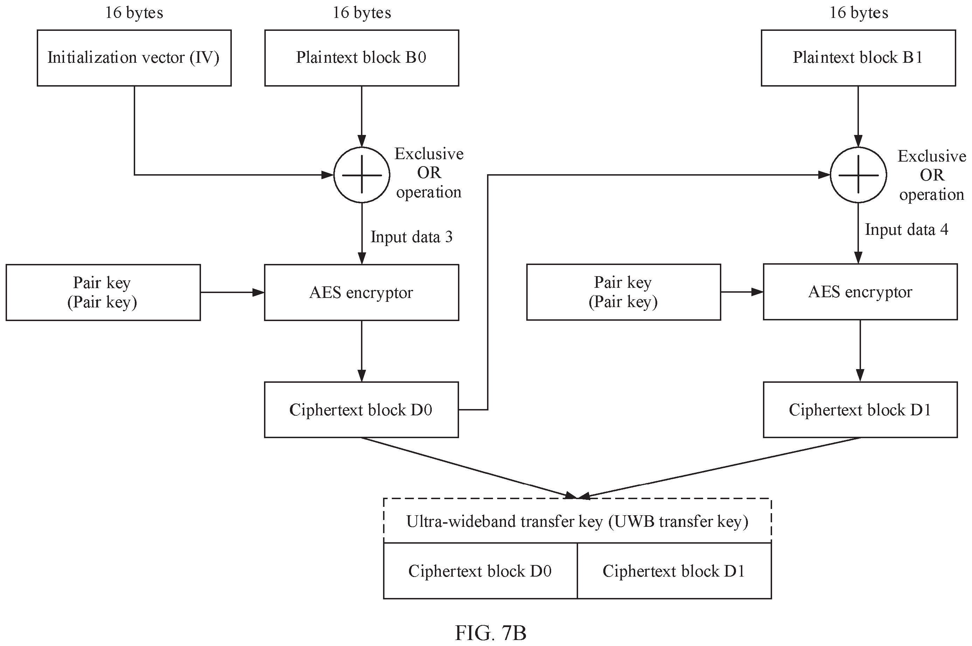

For example, as shown in FIG. 7B, a process of generating the ultra-wideband transfer key (UWB transfer key) according to the AES128-CBC encryption algorithm based on the root key and the vendor identifier of the UWB chip 103 may be as follows:
1: Generate a plaintext block B0 and a plaintext block B1 based on the chip identifier (EUI) of the UWB chip 103.
   A data length of the vendor identifier of the UWB chip 103 may be 8 bytes. Data lengths of the plaintext block B0 and the plaintext block B1 may both be 16 bytes. The plaintext block B0 may be "EUI|bitwise negated EUI", where the symbol "∥" represents data concatenation. The plaintext block A1 may be "EUI∥padding value 5∥padding value 6∥data of first four bytes of the vendor identifier∥padding value 7∥padding value 8". A data length of each padding value is 1 byte. For example, the padding value 5 may be "F1", the padding value 2 may be "01", the padding value 3 may be "1F", and the padding value 4 may be "01".
2: Perform an exclusive OR operation on an initialization vector (initialization vector, IV) and the plaintext block B0, to obtain input data 3.
3: Input the input data 3 and the pair key to the AES encryptor to perform an encryption operation, to obtain a ciphertext block D0.
4: Perform an exclusive OR operation on the ciphertext block D0 and the plaintext block B1, to obtain input data 4.
5: Input the input data 4 and the pair key to the AES encryptor to perform an encryption operation, to obtain a ciphertext block D1.
6: Concatenate the ciphertext block D0 and the ciphertext block D1, to obtain the ultra-wideband transfer key (UWB transfer key).

For example, the ciphertext block D1 may be concatenated at a tail of the ciphertext block D0.

S604: The encryptor 400 imports the ultra-wideband transfer key to the UWB chip 103.

The secure ultra-wideband service 1031 may manage and store the ultra-wideband transfer key imported by the encryptor 400 to the UWB chip 103.

S605: The ultra-wideband stack and kernel 1013 may obtain the vendor identifier and the chip identifier of the UWB chip 103 from the UWB chip 103.

After delivery of the electronic device 100, when running on the central processing unit 101, the ultra-wideband stack and kernel 1013 may obtain the vendor identifier and the chip identifier of the UWB chip 103 from the UWB chip 103.

S606: The ultra-wideband stack and kernel 1013 may send the vendor identifier and the chip identifier (EUI) of the UWB chip 103 to the ultra-wideband service 1012.

S607: The ultra-wideband service 1012 may send the vendor identifier and the chip identifier (EUI) of the UWB chip 103 to the car key application 1011.

S608: The car key application 1011 sends a first request to the server 300, where the first request carries the vendor identifier and the chip identifier of the UWB chip.

The first request is used to request the server 300 to generate a UWB transfer key.

S609: The server 300 may generate a pair key based on a root key (Root key) and the vendor identifier of the UWB chip 103.

The server 300 may store the root key (Root key). The root key stored in the server 300 is the same as the root key stored in the encryptor 400. A process in which the server 300 generates the pair key based on the root key and the vendor identifier of the UWB chip 103 is the same as the process in which the encryptor 400 generates the pair key. For details about the process in which the server 300 generates the pair key, refer to the process in which the encryptor 400 generates the pair key in step S602.

S610: The server 300 generates the ultra-wideband transfer key (UWB transfer key) based on the pair key and the chip identifier of the UWB chip 103.

A process in which the server 300 generates the ultra-wideband transfer key is the same as the process in which the encryptor 400 generates the ultra-wideband transfer key. For details about the process in which the server 300 generates the ultra-wideband transfer key, refer to the process in which the encryptor 400 generates the ultra-wideband transfer key in step S603. Details are not described herein again.

S611: The server 300 sends the ultra-wideband transfer key to the car key application 1011.

Before sending the ultra-wideband transfer key to the car key application 1011, the server 300 may establish a secure transmission channel with the car key application 1011, to ensure security of data transmission between the server 300 and the car key application 1011.

For example, the server 300 and the car key application 1011 may first mutually verify digital certificates of each other. After mutual verification on the digital certificates of each other succeeds, the server 300 may obtain a public key (PK.application) of the car key application 1011. The car key application 1011 may obtain a public key (PK.server) of the server 300. The server 300 may generate a symmetric key (SYK) by using a private key (SK.server) of the server 300 and the public key (PK.application) of the car key application 1011. The car key application 1011 may also generate the same symmetric key (SYK) by using the public key (PK.server) of the server 300 and a private key (SK.application) of the car key application 1011. The public key (PK.application) of the car key application 1011 and the private key (SK.application) of the car key application 1011 are a pair of asymmetric keys. The public key (PK.server) of the server 300 and the private key (SK.server) of the server 300 are a pair of asymmetric keys. The server 300 may encrypt the ultra-wideband transfer key by using the symmetric key (SYK), and send the encrypted ultra-wideband transfer key to the car key application 1011. The car key application 1011 may decrypt the ultra-wideband transfer key from the encrypted ultra-wideband transfer key by using the symmetric key (SYK). The foregoing example is used merely to explain this application, and shall not constitute a limitation. In this embodiment of this application, the secure transmission channel between the server 300 and the car key application 1011 may use an SCP03 security specification, an SCP11a security specification, or the like. This is not limited herein.

S612: The car key application 1011 sends the ultra-wideband transfer key to the secure service 1014.

S613: The secure service 1014 sends the ultra-wideband transfer key to the secure ultra-wideband management applet 1022 of the secure chip 102 by using the TEE.

The secure ultra-wideband management applet 1022 may manage and store the ultra-wideband transfer key.

After receiving the ultra-wideband transfer key sent by the server 300, the car key application 1011 may first establish a secure transmission channel with the secure chip 102 by using the secure service 1014 and the TEE. Then, the car key application 1011 may send the ultra-wideband transfer key to the secure chip 102 through the secure transmission channel established with the secure chip 102 by using the secure service 1014 and the TEE. In this way, security of transmitting the ultra-wideband transfer key from the car key application 1011 to the secure chip 102 can be ensured.

S614: The digital key applet 1021 may generate a target URSK.

When a digital car key of a vehicle is enabled, the car key application 1011 may obtain a key for the car key. The car key application 1011 may store the key for the car key in the secure chip 102. The digital key applet 1021 may derive a car key session key (Session key) based on the key for the car key. The digital key applet 1021 may generate one or more URSKs based on the car key session key, where the one or more URSKs include the target URSK.

S615: The secure ultra-wideband management applet 1022 encrypts the target URSK by using the ultra-wideband transfer key, to obtain encrypted data A.

The secure ultra-wideband management applet 1022 may obtain the target URSK from the digital key applet 1021. Then, the secure ultra-wideband management applet 1022 may encrypt the target URSK into the encrypted data A by using the ultra-wideband transfer key.

S616: The secure ultra-wideband management applet 1022 sends the encrypted data A to the secure service 1014 by using the TEE.

S617: The secure service 1014 may send the encrypted data A to the ultra-wideband service 1012.

S618: The ultra-wideband service 1012 sends the encrypted data A to the ultra-wideband stack and kernel 1013.

S619: The ultra-wideband stack and kernel 1013 sends the encrypted data A to the secure ultra-wideband service 1031 in the UWB chip 103.

S620: The secure ultra-wideband service 1031 may decrypt the target URSK from the encrypted data A by using the ultra-wideband transfer key.

For specific content of the URSK transmission process shown in step S615 to step S620, refer to a diagram of a URSK transmission process shown in FIG. 7C-1 and FIG. 7C-2.

As shown in FIG. 7C-1 and FIG. 7C-2, the URSK transmission process may include the following steps.
1: The UWB chip 103 sends a select command to the secure chip 102 via the central processing unit 101, where the select command carries a secure ultra-wideband management applet identifier (SUM AID).
   A plurality of applets (Applets) may run on the secure chip 102, and the plurality of applets include the secure ultra-wideband management applet 1022. The select command is used to select the secure ultra-wideband management applet 1022 in the secure chip 102 to communicate with the UWB chip 103.
   In this embodiment of this application, the UWB chip 103 may perform signaling interaction with the secure chip 102 by sequentially using the ultra-wideband stack and kernel 1013, the ultra-wideband service 1012, the secure service 1014, and the TEE on the central processing unit 101.
2: The secure ultra-wideband management applet 1022 sends a select response (Select Response) to the UWB chip 103 via the central processing unit 101.
   The select response indicates that the secure chip 102 starts the secure ultra-wideband management applet 1022 to communicate with the UWB chip 103.
3: The UWB chip 103 sends a get challenge (Get Challenge) command to the secure ultra-wideband management applet 1022 via the central processing unit 101.
   The get challenge command is used to request the secure ultra-wideband management applet 1022 to return a random number to the UWB chip 103.
4: The secure ultra-wideband management applet 1022 sends a random number 1 to the UWB chip 103 via the central processing unit 101.
5: The UWB chip 103 encrypts the random number 1 by using an ultra-wideband transfer key (UWB transfer key), to obtain an authentication ciphertext.
6: The UWB chip 103 sends the authentication ciphertext to the secure ultra-wideband management applet 1022 via the central processing unit 101.
7: The secure ultra-wideband management applet 1022 decrypts a random number 2 from the authentication ciphertext by using the ultra-wideband transfer key (UWB transfer key).
8: The secure ultra-wideband management applet 1022 may determine whether the random number 2 is the same as the random number 1.
9: If the random number 2 is the same as the random number 1, the secure chip 102 may send a response 1 to the UWB chip 103 via the central processing unit 101. The response 1 indicates that random number verification succeeds.
   If the random number 2 is different from the random number 1, the secure chip 102 returns a response 2 to the UWB chip 103 via the central processing unit 101, where the response 2 indicates that random number verification fails. After receiving the response 2, the secure chip 102 stops performing subsequent steps.
10: After receiving the response 1, the UWB chip 103 sends a URSK obtaining command to the secure ultra-wideband management applet 1022 via the central processing unit 101. The URSK obtaining command carries a session identifier (Session ID) A.
11: The secure ultra-wideband management applet 1022 determines a target URSK from one or more URSKs based on the session identifier A, where different URSKs correspond to different session identifiers.
   The digital key applet 1021 in the secure chip 102 may generate the one or more URSKs based on a car key session key (Session key), and different URSKs correspond to different session identifiers. After obtaining the session identifier A, the secure ultra-wideband management applet 1022 may obtain, from the one or more URSKs managed and stored by the digital key applet 1021, the target URSK corresponding to the session identifier A.
12: The secure ultra-wideband management applet 1022 encrypts the target URSK by using the ultra-wideband transfer key, to obtain encrypted data A.
13: The secure ultra-wideband management applet 1022 sends the encrypted data A to the UWB chip 103 via the central processing unit 101.
14: The UWB chip 103 decrypts the target URSK from the encrypted data A by using the ultra-wideband transfer key.

After decrypting the target URSK by using the secure ultra-wideband management applet 1022, the UWB chip 103 may derive a ranging process key based on the target URSK. The UWB chip 103 may perform UWB ranging communication with the UWB chip 206 in the vehicle 200 by using the ranging process key, to ensure security in a UWB ranging process.

In this embodiment of this application, the encrypted data A may be referred to as first encrypted data, the random number 1 may be referred to as a first random number, the random number 2 may be referred to as a second random number, the response 1 may be referred to as a first response, and the session identifier A may be referred to as a first session identifier.

The following describes a UWB key transmission method provided in embodiments of this application.

An embodiment of this application provides a UWB key transmission method. A UWB chip of an electronic device 100 may generate a public key PK1 and a private key SK1, where the public key PK1 and the private key SK1 are a pair of public and private keys. The UWB chip sends the public key PK1 to a car key application running on a central processing unit of the electronic device 100. The car key application may request a server to generate an ultra-wideband transfer key (UWB transfer key). After obtaining the UWB transfer key sent by the server, the car key application may encrypt the UWB transfer key into encrypted data B by using the public key PK1, and send the encrypted data B to the UWB chip. After receiving the encrypted data B, the UWB chip may decrypt the UWB transfer key from the encrypted data B by using the private key SK1. After obtaining the UWB transfer key sent by the server, the car key application may further store the UWB transfer key in a secure chip by using a TEE. The secure chip may encrypt, by using the UWB transfer key, a URSK required when the UWB chip performs ranging, to obtain encrypted data A. The secure chip may transfer the encrypted data A to the UWB chip by using the TEE and an REE on the central processing unit. The UWB chip may decrypt the URSK from the encrypted data A by using the UWB transfer key delivered by the car key application. In this way, the UWB transfer key may not need to be preset in the UWB chip before delivery of the electronic device 100. When it is ensured that the URSK is securely transmitted from the secure chip to the UWB chip, the UWB chip can also be decoupled from the secure chip. Accordingly, the UWB chip and the secure chip do not need to be directly connected to each other, and the secure chip and the UWB chip can be flexibly combined without forcible binding. This reduces costs of producing the electronic device 100 on a production line.

FIG. 8A and FIG. 8B are a diagram of a UWB key transmission method according to another embodiment of this application.

As shown in FIG. 8A and FIG. 8B, the UWB key transmission method may be applied to a UWB key transmission system. The UWB key transmission system may include an electronic device 100 and a server 300. The electronic device 100 may include a central processing unit (CPU) 101, a secure chip (SE Chip) 102, and a UWB chip 103. The secure chip 102 is not connected to the UWB chip 103. The secure chip 102 may be connected to the central processing unit 101, and the UWB chip 103 may be connected to the central processing unit 101. The central processing unit 101 may run two application environments: an REE and a TEE. A car key application 1011, an ultra-wideband service (UWB Service) 1012, an ultra-wideband stack and kernel (UWB stack and kernel) 1013, and a secure service (Secure Service) 1014 may run in the REE. The secure chip 102 may include a digital key applet (DK Applet) 1021 and a secure ultra-wideband management applet (Secure UWB Manage Applet) 1022. The digital key applet 1021 may be any one of a CCC DK applet, an ICCE DK applet, or a FiRa applet. The digital key applet 1021 may invoke the secure ultra-wideband management applet 1022 via an internal interface (internal API). The UWB chip 103 may include a secure ultra-wideband service (Secure UWB Service) 1031.

In a possible implementation, when the secure chip 102 is connected to the UWB chip 103, the UWB key transmission method provided in this embodiment of this application can still be used.

The UWB key transmission method may include the following steps.

S801: The secure ultra-wideband service 1031 may generate a pair of public and private keys. The pair of public and private keys generated by the secure ultra-wideband service 1031 includes a public key PK1 and a private key SK1.

S802: The secure ultra-wideband service 1031 sends the public key PK1 to the ultra-wideband stack and kernel 1013.

S803: The ultra-wideband stack and kernel 1013 sends the public key PK1 to the ultra-wideband service 1012.

S804: The ultra-wideband service 1012 sends the public key PK1 to the car key application 1011.

The car key application 1011 may store the public key PK1.

S805: The car key application 1011 sends a first request to the server 300, where the first request carries a vendor identifier and a chip identifier (EUI) of the UWB chip 103.

The first request is used to request the server 300 to generate a UWB transfer key. After being produced, the UWB chip 103 may store the vendor identifier and the chip identifier of the UWB chip 103 in a storage medium inside the UWB chip 103. After delivery of the electronic device 100, when running on the central processing unit 101, the ultra-wideband stack and kernel 1013 may obtain the vendor identifier and the chip identifier of the UWB chip 103 from the UWB chip 103. The ultra-wideband stack and kernel 1013 may send the vendor identifier and the chip identifier (EUI) of the UWB chip 103 to the ultra-wideband service 1012. The ultra-wideband service 1012 may send the vendor identifier and the chip identifier (EUI) of the UWB chip 103 to the car key application 1011.

S806: The server 300 generates a pair key based on a root key (Root key) and the vendor identifier of the UWB chip 103.

The server 300 may store the root key (Root key). For details about a process in which the server 300 generates the pair key, refer to the process of generating the pair key in the embodiment shown in FIG. 7A. Details are not described herein again.

S807: The server 300 may generate the ultra-wideband transfer key (UWB transfer key) based on the pair key and the chip identifier of the UWB chip 103.

For details about a process in which the server 300 generates the ultra-wideband transfer key, refer to the process of generating the ultra-wideband transfer key in the embodiment shown in FIG. 7B. Details are not described herein again.

S808: The server 300 may send the ultra-wideband transfer key to the car key application 1011.

For specific content, refer to step S611 in the embodiment shown in FIG. 6A and FIG. 6B. Details are not described herein again.

S809: The car key application 1011 may encrypt the ultra-wideband transfer key by using the public key PK1, to obtain encrypted data B.

S810: The car key application 1011 sends the encrypted data B to the ultra-wideband service (UWB Service) 1012.

S811: The ultra-wideband service 1012 sends the encrypted data B to the ultra-wideband stack and kernel 1013.

S812: The ultra-wideband stack and kernel 1013 sends the encrypted data B to the secure ultra-wideband service 1031.

S813: The secure ultra-wideband service 1031 may decrypt the ultra-wideband transfer key from the encrypted data B by using the private key SK1.

S814: The car key application 1011 sends the ultra-wideband transfer key to the secure service (Secure Service) 1014.

S815: The secure service (Secure Service) 1014 sends the ultra-wideband transfer key to the secure ultra-wideband management applet 1022 by using the TEE.

After receiving the ultra-wideband transfer key sent by the server 300, the car key application 1011 may first establish a secure transmission channel with the secure chip 102 by using the secure service 1014 and the TEE. Then, the car key application 1011 may send the ultra-wideband transfer key to the secure chip 102 through the secure transmission channel established with the secure chip 102 by using the secure service 1014 and the TEE. In this way, security of transmitting the ultra-wideband transfer key from the car key application 1011 to the secure chip 102 can be ensured.

S816: The digital key applet 1021 may generate a target URSK.

When a digital car key of a vehicle is enabled, the car key application 1011 may obtain a key for the car key. The car key application 1011 may store the key for the car key in the secure chip 102. The digital key applet 1021 may derive a car key session key (Session key) based on the key for the car key. The digital key applet 1021 may generate one or more URSKs based on the car key session key, where the one or more URSKs include the target URSK.

S817: The secure ultra-wideband management applet 1022 encrypts the URSK by using the ultra-wideband transfer key, to obtain encrypted data A.

The secure ultra-wideband management applet 1022 may obtain the target URSK from the digital key applet 1021. Then, the secure ultra-wideband management applet 1022 may encrypt the target URSK into the encrypted data A by using the ultra-wideband transfer key.

S818: The secure ultra-wideband management applet 1022 sends the encrypted data A to the secure service 1014 by using the TEE.

S819: The secure service 1014 sends the encrypted data A to the ultra-wideband service 1012.

S820: The ultra-wideband service 1012 sends the encrypted data A to the ultra-wideband stack and kernel 1013.

S821: The ultra-wideband stack and kernel 1013 sends the encrypted data A to the secure ultra-wideband service 1031 in the UWB chip 103.

S822: The secure ultra-wideband service 1031 may decrypt the target URSK from the encrypted data A by using the ultra-wideband transfer key.

For specific content of the URSK transmission process shown in step S817 to step S822, refer to the diagram of the URSK transmission process shown in FIG. 7C-1 and FIG. 7C-2.

The target URSK may be used by the UWB chip 103 to perform ranging. After decrypting the target URSK by using the secure ultra-wideband management applet 1022, the UWB chip 103 may derive a ranging process key based on the target URSK. The UWB chip 103 may perform UWB ranging communication with the UWB chip 206 in the vehicle 200 by using the ranging process key, to ensure security in a UWB ranging process.

In this embodiment of this application, the encrypted data A may be referred to as first encrypted data, the encrypted data B may be referred to as second encrypted data, the public key PK1 may be referred to as a first public key, and the private key SK1 may be referred to as a first private key.

The following describes a UWB key transmission method provided in another embodiment of this application.

An embodiment of this application provides a UWB key transmission method. A car key application running on a central processing unit of an electronic device 100 may generate a public key PK2 and a private key SK2, where the public key PK2 and the private key SK2 are a pair of public and private keys. The car key application may send the public key PK2 to a UWB chip of the electronic device 100. The UWB chip may temporarily generate a UWB transfer key. The UWB chip may encrypt the UWB transfer key into encrypted data C by using the public key PK2, and send the encrypted data C to the car key application running on the central processing unit. After receiving the encrypted data C, the car key application may decrypt the UWB transfer key from the encrypted data C by using the private key SK2. After decrypting the UWB transfer key, the car key application may store the UWB transfer key in a secure chip by using a TEE. The secure chip may encrypt, by using the UWB transfer key, a URSK required when the UWB chip performs ranging, to obtain encrypted data A. The secure chip may transfer the encrypted data A to the UWB chip by using the TEE and an REE on the central processing unit. The UWB chip may decrypt the URSK from the encrypted data A by using the UWB transfer key delivered by the car key application. In this way, the UWB transfer key may not need to be preset in the UWB chip before delivery of the electronic device 100, and the car key application does not need to request a server to generate the UWB transfer key. When it is ensured that the URSK is securely transmitted from the secure chip to the UWB chip, the UWB chip can also be decoupled from the secure chip. Accordingly, the UWB chip and the secure chip 102 do not need to be directly connected to each other, and the secure chip and the UWB chip can be flexibly combined without forcible binding. This reduces costs of producing the electronic device 100 on a production line and deployment costs of the server.

FIG. 9A and FIG. 9B are a diagram of a UWB key transmission method according to an embodiment of this application.

As shown in FIG. 9A and FIG. 9B, the UWB key transmission method may be applied to an electronic device 100. The electronic device 100 may include a central processing unit (CPU) 101, a secure chip (SE Chip) 102, and a UWB chip 103. The secure chip 102 is not connected to the UWB chip 103. The secure chip 102 may be connected to the central processing unit 101, and the UWB chip 103 may be connected to the central processing unit 101. The central processing unit 101 may run two application environments: an REE and a TEE. A car key application 1011, an ultra-wideband service (UWB Service) 1012, an ultra-wideband stack and kernel (UWB stack and kernel) 1013, and a secure service (Secure Service) 1014 may run in the REE. The secure chip 102 may include a digital key applet (DK Applet) 1021 and a secure ultra-wideband management applet (Secure UWB Manage Applet) 1022. The digital key applet 1021 may be any one of a CCC DK applet, an ICCE DK applet, or a FiRa applet. The digital key applet 1021 may invoke the secure ultra-wideband management applet 1022 via an internal interface (internal API). The UWB chip 103 may include a secure ultra-wideband service (Secure UWB Service) 1031.

In a possible implementation, when the secure chip 102 is connected to the UWB chip 103, the UWB key transmission method provided in this embodiment of this application can still be used.

The UWB key transmission method may include the following steps.

S901: The car key application 1011 may generate a pair of public and private keys. The pair of public and private keys generated by the car key application 1011 includes a public key PK2 and a private key SK2.

S902: The car key application 1011 sends the public key PK2 to the ultra-wideband service 1012.

S903: The ultra-wideband service 1012 sends the public key PK2 to the ultra-wideband stack and kernel 1013.

S904: The ultra-wideband stack and kernel 1013 sends the public key PK2 to the secure ultra-wideband service 1031.

S905: The secure ultra-wideband service 1031 generates an ultra-wideband transfer key (UWB transfer key).

The secure ultra-wideband service 1031 may randomly generate a temporary ultra-wideband transfer key (UWB transfer key). After a target URSK is decrypted by using the temporary UWB transfer key, the temporary UWB transfer key may be destroyed.

In a possible implementation, the secure ultra-wideband service 1031 may generate the UWB transfer key based on a root key, a vendor identifier of the UWB chip 103, and a chip identifier of the UWB chip 103. The secure ultra-wideband service 1031 may first generate a pair key based on the root key and the vendor identifier of the UWB chip 103. Then, the secure ultra-wideband service 1031 may generate the UWB transfer key based on the pair key and the chip identifier of the UWB chip 103. For details about processes of generating the pair key and the UWB transfer key, refer to the embodiments shown in FIG. 7A and FIG. 7B. Details are not described herein again.

S906: The secure ultra-wideband service 1031 encrypts the ultra-wideband transfer key by using the public key PK2, to obtain encrypted data C.

S907: The secure ultra-wideband service 1031 sends the encrypted data C to the ultra-wideband stack and kernel 1013.

S908: The ultra-wideband stack and kernel 1013 sends the encrypted data C to the ultra-wideband service 1012.

S909: The ultra-wideband service 1012 sends the encrypted data C to the car key application 1011.

S910: The car key application 1011 decrypts the ultra-wideband transfer key from the encrypted data C by using the private key SK2.

S911: The car key application 1011 sends the ultra-wideband transfer key to the secure service (Secure Service) 1014.

S912: The secure service 1014 sends the ultra-wideband transfer key to the secure ultra-wideband management applet 1022 by using the TEE.

After decrypting the ultra-wideband transfer key, the car key application 1011 may first establish a secure transmission channel with the secure chip 102 by using the secure service 1014 and the TEE. Then, the car key application 1011 may send the ultra-wideband transfer key to the secure chip 102 through the secure transmission channel established with the secure chip 102 by using the secure service 1014 and the TEE. In this way, security of transmitting the ultra-wideband transfer key from the car key application 1011 to the secure chip 102 can be ensured.

S913: The digital key applet 1021 generates a target ultra-wideband ranging session key (URSK).

When a digital car key of a vehicle is enabled, the car key application 1011 may obtain a key for the car key. The car key application 1011 may store the key for the car key in the secure chip 102. The digital key applet 1021 may derive a car key session key (Session key) based on the key for the car key. The digital key applet 1021 may generate one or more URSKs based on the car key session key, where the one or more URSKs include the target URSK.

S914: The secure ultra-wideband management applet 1022 encrypts the URSK by using the ultra-wideband transfer key, to obtain encrypted data A.

The secure ultra-wideband management applet 1022 may obtain the target URSK from the digital key applet 1021. Then, the secure ultra-wideband management applet 1022 may encrypt the target URSK into the encrypted data A by using the ultra-wideband transfer key.

S915: The secure ultra-wideband management applet 1022 sends the encrypted data A to the secure service 1014 by using the TEE.

S916: The secure service 1014 sends the encrypted data A to the ultra-wideband service 1012.

S917: The ultra-wideband service 1012 sends the encrypted data A to the ultra-wideband stack and kernel 1013.

S918: The ultra-wideband stack and kernel 1013 sends the encrypted data A to the secure ultra-wideband service 1031 in the UWB chip 103.

S919: The secure ultra-wideband service 1031 may decrypt the target URSK from the encrypted data A by using the ultra-wideband transfer key.

For specific content of the URSK transmission process shown in step S914 to step S919, refer to the diagram of the URSK transmission process shown in FIG. 7C-1 and FIG. 7C-2.

The target URSK is used by the UWB chip 103 to perform ranging. After decrypting the target URSK by using the secure ultra-wideband management applet 1022, the UWB chip 103 may derive a ranging process key based on the target URSK. The UWB chip 103 may perform UWB ranging communication with a UWB chip 206 in a vehicle 200 by using the ranging process key, to ensure security in a UWB ranging process.

In this embodiment of this application, the encrypted data A may be referred to as first encrypted data, the encrypted data B may be referred to as second encrypted data, the encrypted data C may be referred to as third encrypted data, the public key PK2 may be referred to as a second public key, and the private key SK2 may be referred to as a second private key.

The following describes a UWB key transmission method provided in another embodiment of this application.

In some types of electronic devices 100, for example, devices such as watches and bands, because a UWB chip in the electronic device 100 has no security capability, the UWB chip can be used only as a transceiver for UWB communication, and cannot generate a UWB communication packet based on a URSK. Therefore, embodiments of this application provide a UWB key transmission method, so that a TEE of a central processing unit can obtain a car key session key from a secure chip of the electronic device 100. After obtaining the car key session key, the TEE may generate the URSK based on the car key session key. Then, a UWB CA in an REE of the central processing unit may obtain the URSK from the TEE, and deliver the URSK to a microcontroller unit. When performing ranging via the UWB chip, the microcontroller unit may generate a UWB communication packet based on the URSK, and then send the UWB communication packet by using a signal receiving and sending capability of the UWB chip, or may parse, based on the URSK, a UWB communication packet received by the UWB chip, to complete UWB ranging. In this way, a UWB transfer key may not need to be preset in the UWB chip before delivery of the electronic device 100, and a car key application does not need to request a server to generate the UWB transfer key. When the URSK is transmitted to the UWB chip, the UWB chip can also be decoupled from a secure chip. Accordingly, the UWB chip and the secure chip 102 do not need to be directly connected to each other, and the secure chip and the UWB chip can be flexibly combined without forcible binding. This reduces costs of producing the electronic device 100 on a production line and deployment costs of the server.

FIG. 10A and FIG. 10B are a diagram of a UWB key transmission method according to an embodiment of this application.

As shown in FIG. 10A and FIG. 10B, the UWB key transmission method may be applied to an electronic device 100. The electronic device 100 may include a central processing unit (CPU) 101, a secure chip (SE Chip) 102, a microcontroller unit (microcontroller unit, MCU) 104, and a UWB chip 103. The secure chip 102 is not connected to the UWB chip 103. The secure chip 102 may be connected to the central processing unit 101, the UWB chip 103 may be connected to the central processing unit 101, and the microcontroller unit 104 may be connected to the central processing unit 101 and the UWB chip 103. The central processing unit 101 may run two application environments: an REE and a TEE. A car key application 1011, an ultra-wideband service (UWB Service) 1012, an ultra-wideband stack and kernel (UWB stack and kernel) 1013, and a secure service (Secure Service) 1014 may run in the REE. The ultra-wideband service 1012 may include an ultra-wideband client application (UWB CA) 1016. An ultra-wideband trusted application (UWB TEE application, UWB TA) 1015 may run in the TEE. An ultra-wideband service (UWB Service) 1041 may run on the microcontroller unit 104. The ultra-wideband service 1041 may include a secure ultra-wideband service (Secure UWB Service) 1042.

The secure chip 102 may include a digital key applet (DK Applet) 1021 and a secure ultra-wideband management applet (Secure UWB Manage Applet) 1022. The digital key applet 1021 may be any one of a CCC DK applet, an ICCE DK applet, or a FiRa applet. The digital key applet 1021 may invoke the secure ultra-wideband management applet 1022 via an internal interface (internal API). The UWB chip 103 has no security capability, can be used only as a transceiver for UWB communication, and cannot generate a UWB communication packet based on a URSK.

In a possible implementation, when the secure chip 102 is connected to the UWB chip 103, the UWB key transmission method provided in this embodiment of this application can still be used.

The UWB key transmission method may include the following steps.

S1001: The car key application 1011 sends a key for a car key to the secure service 1014.

When the digital car key of a vehicle is enabled, the car key application 1011 may obtain the key for the car key. The car key application 1011 may store the key for the car key in the secure chip 102.

S1002: The secure service 1014 sends the key for the car key to the secure chip 102 by using the TEE.

Before sending the key for the car key to the secure chip 102 by using the secure service 1014 and the TEE, the car key application 1011 may establish a secure transmission channel with the secure chip 102 by using the secure service 1014 and the TEE. In this embodiment of this application, a security specification used for establishing the secure transmission channel may be an SCP03 security specification, an SCP11a security specification, or the like. This is not limited herein.

The digital key applet 1021 in the secure service 1014 may store the key for the car key.

S1003: The digital key applet 1021 may derive a car key session key based on the key for the car key.

S1004: The ultra-wideband trusted application 1015 obtains the car key session key from the digital key applet 1021.

S1005: The ultra-wideband trusted application 1015 generates a target URSK based on the car key session key.

S1006: The ultra-wideband trusted application 1015 sends the target URSK to the secure service 1014.

S1007: The secure service 1014 sends the target URSK to the ultra-wideband client application 1016.

The ultra-wideband trusted application 1015 may generate one or more URSKs based on the car key session key, where the one or more URSKs include the target URSK. Different URSKs correspond to different session identifiers (Session IDs).

Specifically, the ultra-wideband service 1041 in the microcontroller unit 104 may send a URSK obtaining request 1 to the ultra-wideband client application 1016 by using the ultra-wideband stack and kernel 1013, where the URSK obtaining request 1 carries a session identifier A. The ultra-wideband client application 1016 may send a URSK obtaining request 2 to the ultra-wideband trusted application 1015 by using the secure service 1014, where the URSK obtaining request 2 carries the session identifier A, and the URSK obtaining request 2 is used to request the URSK from the ultra-wideband trusted application 1015. After receiving the URSK obtaining request 2, the ultra-wideband trusted application 1015 may determine the target URSK from the one or more URSKs based on the session identifier A. The ultra-wideband trusted application 1015 may send the target URSK to the ultra-wideband client application 1016 by using the secure service 1014.

In a possible implementation, the ultra-wideband client application 1016 stores a requester allowlist. The requester allowlist includes an identifier of one or more modules that have permission to request the URSK. The identifier of the one or more modules that have the permission to request the URSK includes an identifier of the ultra-wideband service 1041. A URSK obtaining request that is sent by a target requester and that is received by the ultra-wideband client application 1016 carries an identifier of the target requester. The ultra-wideband client application 1016 determines whether the requester allowlist includes the identifier of the target requester. If the requester allowlist includes the identifier of the target requester, the ultra-wideband client application 1016 may request the URSK from the ultra-wideband trusted application 1015 by using the secure service 1014. If the requester allowlist includes the identifier of the target requester, the ultra-wideband client application 1016 does not request the URSK from the ultra-wideband trusted application 1015. Optionally, if the requester allowlist does not include the identifier of the target requester, the ultra-wideband client application 1016 may return a rejection response to the target requester. The rejection response indicates that the target requester has no permission to request the URSK.

Because the request allowlist includes the identifier of the ultra-wideband service 1041, the ultra-wideband service 1041 has the permission to request the URSK. The URSK obtaining request 1 further carries the identifier of the ultra-wideband service 1041. After obtaining the URSK obtaining request 1, the ultra-wideband client application 1016 may obtain the identifier of the ultra-wideband service 1041 from the URSK obtaining request 1. After determining that the requester allowlist includes the identifier of the ultra-wideband service 1041, the ultra-wideband client application 1016 may send the URSK obtaining request 2 to the ultra-wideband trusted application 1015 by using the secure service 1014. After obtaining the target URSK returned by the ultra-wideband trusted application 1015, the ultra-wideband client application 1016 may send the target URSK to the ultra-wideband service 1041 in the microcontroller unit 104 by using the ultra-wideband stack and kernel 1013. In this way, the ultra-wideband client application 1016 can control the permission to request the URSK, to prevent another module without the permission from obtaining the URSK.

In a possible implementation, the digital key applet 1021 may generate one or more URSKs based on the car key session key, where the one or more URSKs include the target URSK. Different URSKs correspond to different session identifiers (Session IDs). The ultra-wideband service 1041 in the microcontroller unit 104 may send a URSK obtaining request 1 to the ultra-wideband client application 1016 by using the ultra-wideband stack and kernel 1013, where the URSK obtaining request 1 carries a session identifier A. The ultra-wideband client application 1016 may send a URSK obtaining request 2 to the ultra-wideband trusted application 1015 by using the secure service 1014, where the URSK obtaining request 2 carries the session identifier A, and the URSK obtaining request 2 is used to request the URSK from the ultra-wideband trusted application 1015. After receiving the URSK obtaining request 2, the ultra-wideband trusted application 1015 may send a URSK obtaining command to the secure ultra-wideband management applet 1022 in the secure chip 102, where the URSK obtaining command carries the session identifier A. After obtaining the URSK obtaining command, the secure ultra-wideband management applet 1022 may determine, via an internal interface (internal API) based on the session identifier A, the target URSK corresponding to the session identifier A from the one or more URSKs stored in the digital key applet 1021. The secure ultra-wideband management applet 1022 may return the target URSK to the ultra-wideband trusted application 1015. After obtaining the target URSK, the ultra-wideband trusted application 1015 may return the target URSK to the ultra-wideband client application 1016 by using the secure service 1014.

S1008: The ultra-wideband client application 1016 sends the target URSK to the ultra-wideband stack and kernel 1013.

S1009: The ultra-wideband stack and kernel 1013 sends the target URSK to the microcontroller unit 104.

S1010: The secure ultra-wideband service 1042 in the microcontroller unit 104 may store the target URSK.

S1011: The ultra-wideband service 1041 in the microcontroller unit 104 may generate a UWB communication packet based on the target URSK.

The ultra-wideband service 1041 may derive a ranging process key based on the target URSK, and then the ultra-wideband service 1041 may generate a ranging parameter (for example, a scrambled timestamp sequence (scrambled timestamp sequence, STS)) based on the ranging process key. The ultra-wideband service 1041 may generate the UWB communication packet based on the ranging parameter.

S1012: The ultra-wideband service 1041 sends the UWB communication packet to the ultra-wideband stack and kernel 1043.

S1013: The ultra-wideband stack and kernel 1043 may send the UWB communication packet to the UWB chip 103.

After receiving the UWB communication packet, the UWB chip 103 may send the UWB communication packet to a to-be-ranged device (for example, the vehicle 200).

The UWB chip 103 may further receive a UWB communication packet sent by the to-be-ranged device, and send the received UWB communication packet to the ultra-wideband service 1041 in the microcontroller unit 104 for parsing, to complete UWB secure ranging.

The following describes a hardware structure of an electronic device provided in embodiments of this application.

FIG. 11 is a diagram of a hardware structure of an electronic device 100.

The following uses the electronic device 100 as an example to specifically describe this embodiment. It should be understood that the electronic device 100 shown in FIG. 11 is merely an example, and the electronic device 100 may have more or fewer components than those shown in FIG. 11, or a combination of two or more components, or a configuration of different components. The components shown in FIG. 11 may be implemented in hardware including one or more signal processing and/or application-specific integrated circuits, software, or a combination of the hardware and the software.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, an embedded SIM (embedded SIM, eSIM) module 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of the software and the hardware.

The processor 110 may include one or more processing units. For example, the processor 110 may include a central processing unit (CPU), and the central processing unit may also be referred to as an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), a secure chip (SE), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface 130, and/or the like.

The charging management module 140 is configured to receive a charging input from a charger. The charger may be a wireless charger or a wired charger. In some embodiments of wired charging, the charging management module 140 may receive a charging input from a wired charger via the USB interface 130. In some embodiments of wireless charging, the charging management module 140 may receive a wireless charging input via a wireless charging coil of the electronic device 100. When charging the battery 142, the charging management module 140 may further supply power to the electronic device via the power management module 141.

The power management module 141 is configured to connect to the battery 142, the charging management module 140, and the processor 110. The power management module 141 receives an input from the battery 142 and/or an input from the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation via the antenna 1. In some embodiments, at least a part of functional modules of the mobile communication module 150 may be disposed in the processor 110. In some embodiments, at least a part of the functional modules of the mobile communication module 150 may be disposed in a same device as at least a part of modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal via an audio device (which is not limited to the speaker 170A, the receiver 170B, and the like), or displays an image or a video via the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and that includes wireless communication such as ultra-wideband (UWB), a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave via the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device via a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scene. In some embodiments, the ISP may be disposed in the camera 193.

The camera 193 is configured to capture a static image or a video. An optical image of an object is generated via the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented via the NPU, for example, image recognition, facial recognition, speech recognition, and text understanding.

The interface 120 for external memory may be configured to connect to an external memory card, for example, a micro SD card, to extend a storage capability of the electronic device 100. The external memory card communicates with the processor 110 via the interface 120 for external memory, to implement a data storage function. For example, files such as music and a video are stored in the external memory card.

The internal memory 121 may be configured to store computer-executable program code, where the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the electronic device 100, and the like. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function, for example, music playing or recording, via the audio module 170, the speaker 170A, the receiver 170B, the microphone 170C, the headset jack 170D, the application processor, and the like. The pressure sensor 180A is configured to sense a pressure signal, and may convert the pressure signal into an electrical signal. In some embodiments, the pressure sensor 180A may be disposed on the display 194. The gyro sensor 180B may be configured to determine a motion posture of the electronic device 100. The barometric pressure sensor 180C is configured to measure barometric pressure. The magnetic sensor 180D includes a Hall sensor. The electronic device 100 may detect opening or closing of a flip cover via the magnetic sensor 180D. The acceleration sensor 180E may detect magnitude of accelerations of the electronic device 100 in various directions (generally on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen that is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided via the display 194. In some other embodiments, the touch sensor 180K may alternatively be disposed on a surface of the electronic device 100 at a position different from that of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status or a power change, or may be configured to indicate a message, a missed call, a notification, or the like.

In this embodiment of this application, the secure chip and an NFC chip may be integrated into two parts of a same chip, or may be two separate chips. This is not limited herein.

The following describes a structure of a server provided in embodiments of this application.

FIG. 12 is a diagram of a hardware structure of a server 300.

As shown in FIG. 12, the server 300 may include one or more processors 301, a communication interface 302, and a memory 303. The processor 301, the communication interface 302, and the memory 303 may be connected to each other via a bus or in another manner. In this embodiment of this application, a connection via a bus 304 is used as an example.

The processor 301 may include one or more general-purpose processors, for example, a CPU. The processor 301 may be configured to run program code related to a device control method.

The communication interface 302 may be a wired interface (for example, an ethernet interface) or a wireless interface (for example, a cellular network interface), and is configured to communicate with another node. In this embodiment of this application, the communication interface 302 may be specifically configured to: communicate with the electronic device 100, and receive a vendor identifier and a chip identifier of a UWB chip that are sent by the electronic device 100.

The memory 303 may include a volatile memory (volatile memory), for example, a random access memory (random access memory, RAM), and may also include a non-volatile memory (non-volatile memory), for example, a ROM, a flash memory (flash memory), a hard disk drive (Hard Disk Drive, HDD), or a solid state drive (Solid State Drive, SSD). The memory 303 may alternatively include a combination of the foregoing types of memories.

It should be noted that the server 300 shown in FIG. 12 is merely an implementation in embodiments of this application. During actual application, the server 300 may alternatively include more or fewer components. This is not limited herein.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product. When the computer program product runs on a computer, the computer is enabled to perform steps in the foregoing method embodiments.

An embodiment of this application further provides a chip system. The chip system includes a central processing unit, a UWB chip, and a secure chip. The UWB chip is not connected to the secure chip. The central processing unit is connected to the UWB chip, and the central processing unit is connected to the secure chip. The chip system may implement steps in any one of the method embodiments of this application. The chip system may be a single chip, or a chip module including a plurality of chips.

In conclusion, the foregoing embodiments are intended merely to describe the technical solutions in this application, but not to limit the technical solutions. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the scope of the technical solutions in embodiments of this application.

## Claims

1. An ultra-wideband UWB key transmission method, applied to an electronic device, wherein the electronic device comprises a central processing unit, a UWB chip, and a secure chip, the central processing unit is connected to the UWB chip, and the central processing unit is connected to the secure chip; and the method comprises:
obtaining, by the central processing unit, an ultra-wideband transfer key, and storing the ultra-wideband transfer key in the secure chip, wherein the secure chip stores a target ultra-wideband ranging session key URSK;
encrypting, by the secure chip, the target URSK into first encrypted data by using the ultra-wideband transfer key;
sending, by the secure chip, the first encrypted data to the UWB chip via the central processing unit, wherein the UWB chip stores the ultra-wideband transfer key; and
decrypting, by the UWB chip, the target URSK from the first encrypted data by using the ultra-wideband transfer key, wherein the target URSK is used by the UWB chip to perform ranging.

2. The method according to claim 1, wherein obtaining, by the central processing unit, the ultra-wideband transfer key specifically comprises:
obtaining, by the central processing unit, the ultra-wideband transfer key sent by a server.

3. The method according to claim 2, wherein before obtaining, by the central processing unit, the ultra-wideband transfer key sent by the server, the method further comprises:
obtaining, by the central processing unit, a vendor identifier of the UWB chip and a chip identifier of the UWB chip from the UWB chip; and
sending, by the central processing unit, a first request to the server, wherein the first request carries the vendor identifier of the UWB chip and the chip identifier of the UWB chip, and the first request is used to request the server to generate the ultra-wideband transfer key based on a root key, the vendor identifier of the UWB chip, and the chip identifier of the UWB chip.

4. The method according to claim 2 or 3, wherein before obtaining, by the central processing unit, the ultra-wideband transfer key, the method further comprises:
before delivery of the electronic device, exporting, by the UWB chip, the vendor identifier of the UWB chip and the chip identifier of the UWB chip to an encryptor, wherein the encryptor is configured to generate the ultra-wideband transfer key based on the root key, the vendor identifier of the UWB chip, and the chip identifier of the UWB chip; and
receiving, by the UWB chip, the ultra-wideband transfer key imported by the encryptor.

5. The method according to claim 2 or 3, wherein before the UWB chip stores the ultra-wideband transfer key, the method further comprises:
generating, by the UWB chip, a first public key and a first private key, wherein the first public key and the first private key are a pair of public and private keys;
sending, by the UWB chip, the first public key to the central processing unit;
after obtaining the ultra-wideband transfer key sent by the server, encrypting, by the central processing unit, the ultra-wideband transfer key into second encrypted data by using the first public key;
sending, by the central processing unit, the second encrypted data to the UWB chip; and
decrypting, by the UWB chip, the ultra-wideband transfer key from the second encrypted data by using the first private key.

6. The method according to claim 1, wherein before the UWB chip stores the ultra-wideband transfer key, the method further comprises:
generating, by the UWB chip, the ultra-wideband transfer key.

7. The method according to claim 6, wherein before obtaining, by the central processing unit, the ultra-wideband transfer key, the method further comprises:
generating, by the central processing unit, a second public key and a second private key, wherein the second public key and the second private key are a pair of public and private keys, and
sending, by the central processing unit, the second public key to the UWB chip; and
obtaining, by the central processing unit, the ultra-wideband transfer key specifically comprises:
encrypting, by the UWB chip, the ultra-wideband transfer key into third encrypted data by using the second public key,
sending, by the UWB chip, the third encrypted data to the central processing unit, and
decrypting, by the central processing unit, the ultra-wideband transfer key from the third encrypted data by using the second private key.

8. The method according to claim 6 or 7, wherein generating, by the UWB chip, the ultra-wideband transfer key specifically comprises:
randomly generating, by the UWB chip, the ultra-wideband transfer key.

9. The method according to claim 6 or 7, wherein the UWB chip stores a vendor identifier of the UWB chip and a chip identifier of the UWB chip; and
generating, by the UWB chip, the ultra-wideband transfer key specifically comprises:
generating, by the UWB chip, the ultra-wideband transfer key based on a root key, the vendor identifier of the UWB chip, and the chip identifier of the UWB chip.

10. The method according to claim 9, wherein generating, by the UWB chip, the ultra-wideband transfer key based on the root key, the vendor identifier of the UWB chip, and the chip identifier of the UWB chip specifically comprises:
generating, by the UWB chip, a pair key based on the root key and the vendor identifier of the UWB chip; and
generating, by the UWB chip, the ultra-wideband transfer key based on the pair key and the chip identifier of the UWB chip.

11. The method according to any one of claims 1 to 10, wherein that the secure chip stores the target ultra-wideband ranging session key URSK specifically comprises:
generating, by the secure chip, one or more URSKs by using a stored car key session key, wherein the one or more URSKs comprise the target URSK; and
storing, by the secure chip, the one or more URSKs, wherein different URSKs correspond to different session identifiers.

12. The method according to claim 11, wherein before encrypting, by the secure chip, the target URSK into the first encrypted data by using the ultra-wideband transfer key, the method further comprises:
sending, by the UWB chip, a URSK obtaining command to the secure chip via the central processing unit, wherein the URSK obtaining command carries a first session identifier; and
after receiving the URSK obtaining command, determining, by the secure chip from the one or more URSKs, the target URSK corresponding to the first session identifier.

13. The method according to claim 12, wherein before sending, by the UWB chip, the URSK obtaining command to the secure chip via the central processing unit, the method further comprises:
sending, by the UWB chip, a get challenge command to the secure chip via the central processing unit,
sending, by the secure chip, a first random number to the UWB chip via the central processing unit after receiving the get challenge command,
encrypting, by the UWB chip, the first random number into an authentication ciphertext by using the ultra-wideband transfer key, and sending the authentication ciphertext to the secure chip via the central processing unit,
decrypting, by the secure chip, a second random number from the authentication ciphertext by using the ultra-wideband transfer key, and
if the second random number is the same as the first random number, sending, by the secure chip, a first response to the UWB chip via the central processing unit, wherein the first response indicates that random number verification succeeds; and
sending, by the UWB chip, the URSK obtaining command to the secure chip via the central processing unit specifically comprises:
sending, by the UWB chip, the URSK obtaining command to the secure chip via the central processing unit after receiving the first response.

14. The method according to any one of claims 1 to 13, wherein the central processing unit runs a rich execution environment REE and a trusted execution environment TEE, and a car key application runs in the REE;
obtaining, by the central processing unit, the ultra-wideband transfer key specifically comprises:
obtaining, by the central processing unit, the ultra-wideband transfer key by using the car key application; and
storing, by the central processing unit, the ultra-wideband transfer key in the secure chip specifically comprises:
storing, by the central processing unit, the ultra-wideband transfer key in the secure chip by using the car key application and the TEE.

15. The method according to any one of claims 1 to 14, wherein the UWB chip is not connected to the secure chip.

16. An electronic device, comprising one or more processors, one or more memories, a secure chip, and a UWB chip, wherein the one or more processors comprise a central processing unit, the central processing unit is connected to the UWB chip, the central processing unit is connected to the secure chip, the one or more memories are configured to store a computer program, and when the one or more processors execute the computer program, the electronic device is enabled to perform the method according to any one of claims 1 to 15.

17. A computer storage medium, comprising a computer program, wherein when the computer program is run on a processor of an electronic device, the electronic device is enabled to perform the method according to any one of claims 1 to 15.

18. A chip system, used in an electronic device, wherein the chip system comprises a central processing unit, a UWB chip, and a secure chip, the UWB chip is not connected to the secure chip, the central processing unit is connected to the UWB chip, the central processing unit is connected to the secure chip, and the chip system is configured to perform the method according to any one of claims 1 to 15.
